# EUROPÄISCHE PATENTSCHRIFT

(11) **EP 2 291 420 B1**
(45) Veröffentlichungstag und Bekanntmachung des Hinweises auf die Patenterteilung: **15.08.2012**
(21) Anmeldenummer: 09769190.1
(22) Anmeldetag: 19.06.2009
(51) Int. Cl.: C08F 220/06, C08F 2/24, C08K 3/10, D21H 19/58

(54) **METALLSALZPIGMENTE ENTHALTENDE PAPIERSTREICHMITTEL MIT GEHALT AN WÄSSRIGEN DISPERSIONEN WASSERLÖSLICHER COPOLYMERE**
METAL SALT PIGMENTS CONTAINING PAPER COATING AGENTS CONTAINING AQUEOUS DISPERSIONS OF WATER-SOLUBLE COPOLYMERS
AGENTS DE REVÊTEMENT DU PAPIER CONTENANT DES PIGMENTS DE SELS MÉTALLIQUES ET DES DISPERSIONS AQUEUSES DE COPOLYMÈRES SOLUBLES DANS L'EAU

(30) Priorität: 24.06.2008 EP 08158872
(43) Veröffentlichungstag der Anmeldung: 09.03.2011
(73) Patentinhaber: BASF SE, 67056 Ludwigshafen (DE)
(72) Erfinder: FEUERHAKE, Robert, 68163 Mannheim (DE); GUBAYDULLIN, Ilshat, 67071 Ludwigshafen (DE); GAUWEILER, Werner, 67363 Lustadt (DE); NIEDBERG, Christina, 67063 Ludwigshafen (DE); SEYFFER, Hermann, 69123 Heidelberg (DE); SCHÄDLER, Volker, 67487 Maikammer (DE)
(86) Internationale Anmeldenummer: PCT/EP2009/057662
(87) Internationale Veröffentlichungsnummer: WO 2009/156341

(56) Entgegenhaltungen:
- WO-A-2005/012378
- DE-A1- 10 338 828
- DE-A1-102005 023 799

## Beschreibung

Die Erfindung betrifft Papierstreichmassen, welche Metallsalzpigmente, insbesondere Carbonatpigmente sowie eine wässrige Dispersion von wasserlöslichen Copolymeren enthält. Die Copolymere sind erhältlich durch radikalische Polymerisation von ethylenisch ungesättigten, anionischen Monomeren mit ethylenisch ungesättigten, nichtionischen Monomeren in Gegenwart von polymeren Stabilisatoren für Wasser-in-Wasser Polymerdispersionen. Die Papierstreichmassen haben gute rheologische Eigenschaften und ein gutes Wasserretentionsverhalten beim Streichen von Papier oder Karton.

Papierstreichmassen enthalten neben Wasser im allgemeinen Pigmente, Bindemittel und Hilfsmittel zur Einstellung der erforderlichen rheologischen Eigenschaften, z. B. Verdicker. Durch Papierstreichmassen erhalten Rohpapiere die gewünschten mechanischen und optischen Eigenschaften. Durch das Bindemittel sollen die Pigmente auf dem Papier fixiert und der Zusammenhalt in der erhaltenen Beschichtung gewährleistet werden. Die mit den Papierstreichmassen beschichteten Papiere sollen insbesondere gut bedruckbar sein. Papierstreichmassen können mittels geeigneter Walzen auf eine fortlaufende Papierbahn aufgetragen werden, wobei überschüssige Streichmasse mit einer Klinge abgestreift und im Kreislauf dem Vorratsbehälter der Streichmasse zurückgeführt werden kann. Für eine einfache und problemlose Verarbeitung der wässrigen Papierstreichmasse ist ein auf das Verarbeitungsverfahren abgestimmtes rheologisches Verhalten gewünscht. Beim Auftragen unter niedriger Scherung sollte die Viskosität möglichst hoch sein, beim Abstreifen unter hoher Scherung sollte die Viskosität möglichst gering sein. Außerdem sollte das rheologische Verhalten bei einem kontinuierlichen Auftrag mit Rückführung abgestreifter Masse im Kreislauf möglichst lange zeitlich konstant bleiben. Durch die Saugwirkung des Papiers wird der Streichmasse ständig Wasser entzogen und es kann dadurch zu unerwünschten Viskositätserhöhungen kommen. Gewünscht sind daher Streichmassen, welche eine möglichst geringe Wasserretention aufweisen. Gewünscht sind außerdem Streichmassen mit einem möglichst hohen Feststoffgehalt, da bei der Trocknung weniger Wasser entfernt werden muss und Energiekosten gespart werden können. Die zur Herstellung der Streichmassen verwendete Verdickerzusammensetzung sollte deshalb möglichst hoch konzentriert aber dennoch zunächst niedrigviskos sein und erst bei Anwendung (z.B. durch pH-Werteinstellung) ihre verdickende Wirkung entfalten. Hochkonzentrierte aber dennoch niedrigviskose Polymerzusammensetzungen können z.B. als Polymerdispersionen durch Emulsionspolymerisation hergestellt werden, wobei aber häufig die erreichbare Kettenlänge der Polymere beschränkt ist (insbesondere im Fall von Acrylsäurepolymeren) und die Wasserretention der hiermit hergestellten Papierstreichmassen noch nicht vollständig befriedigend ist. Durch die Herstellung von wässrigen Dispersionen wasserlöslicher Polymere (so genannte Wasser-in-Wasser Emulsionen) in Gegenwart geeigneter Stabilisatoren können zwar längerkettige Polyacrylsäuren hergestellt werden, aber bei Zusammensetzungen mit hohem Feststoffgehalt kann es vor oder während der Anwendung zu einer unerwünschten Gelierung kommen, insbesondere durch Wechselwirkung mit den übrigen Bestandteilen einer Papierstreichmasse. Auch die Wasserretention kann durch Wechselwirkung mit den übrigen Bestandteilen einer Papiermasse negativ beeinflusst werden.

Wässrige Dispersionen von wasserlöslichen Polymerisaten von ethylenisch ungesättigten anionischen Monomeren und ihre Verwendung u.a. als Zusatz zu Papierstreichmassen werden beschrieben in der WO 2005/012378, in der WO 2006/018113, in der WO 2006/087344 und in der WO 2006/122947. Vernetzte wasserlösliche Polymerdispersionen und deren Verwendung als Verdickungsmittel oder als Bestandteil von Papier- und Tapetenbeschichtungen werden beschrieben in der EP 0 761 701 A1. Wasserlösliche Polymerdispersionen und deren Verwendung als Verdickungsmittel werden auch beschrieben in der EP 0 664 302 A2 und in der WO 03/097703. Stabile Wasser-in-Wasser Emulsionen mit kleiner Partikelgröße und deren Anwendung als Verdicker werden beschrieben in der WO 99/50308. Polymerdispersionen eines dispergierten Polymers eines wasserlöslichen, anionischen Monomers in Gegenwart von polymeren Stabilisatoren sowie die Verwendung der Polymerdispersionen als Verdicker werden beschrieben in der WO 2006/123993.

Aufgabe der vorliegenden Erfindung war es, Papierstreichmassen mit gutem rheologischen Anwendungsprofil, geringer Wasserretention und verminderter Neigung zu Gelierungen zur Verfügung zu stellen.

Gegenstand der Erfindung ist eine Papierstreichmasse enthaltend
(i) anorganische Pigmente, wobei mindestens ein Metallsalzpigment in einer Menge von mindestens 40 Gewichtsteilen, bezogen auf die Gesamtmenge an Pigmenten enthalten ist und
(ii) eine wässrige Dispersion von wasserlöslichen Copolymeren, erhältlich durch radikalische Polymerisation von mindestens einer ersten Monomerart und mindestens einer zweiten Monomerart in Gegenwart mindestens eines polymeren Stabilisators für Wasser-in-Wasser Polymerdispersionen,
wobei die erste Monomerart radikalisch polymerisierbare, ethylenisch ungesättigte, anionische Monomere umfasst und die zweite Monomerart radikalisch polymerisierbare, ethylenisch ungesättigte, nichtionische Monomere umfasst.

Gegenstand der Erfindung ist auch die Verwendung der erfindungsgemäßen Papierstreichmasse zum Beschichten von Papier oder Karton sowie mit der erfindungsgemäßen Papierstreichmasse beschichtetes Papier oder Karton.

Im Folgenden wird die Bezeichnung (Meth)acrylat und ähnliche Bezeichnungen als abkürzende Schreibweise verwendet für "Acrylat oder Methacrylat".

### Pigmente

Die Papierstreichmasse enthält Pigmente in einer Menge von vorzugsweise mindestens 80 Gew.%, z.B. 80 bis 95 Gew.% oder 80 bis 90 Gew.%, bezogen auf den Gesamtfeststoffgehalt. Die Papierstreichmasse enthält mindestens ein anorganisches Metallsalzpigment. Die Menge an Metallsalzpigment beträgt vorzugsweise mindestens 40 Gew.%. oder mindestens 50 Gew.%, oder mindestens 60 Gew.% oder 100 Gew.%, jeweils bezogen auf die Gesamtmenge an Pigmenten. In Betracht kommen insbesondere Weißpigmente. Metallsalzpigmente sind z.B. Calciumsulfat, Calciumaluminatsulfat, Bariumsulfat, Magnesiumcarbonat und Calciumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb® 60, Hydrocarb® 60 oder Hydrocarb® 90 ME.

Zusätzlich zu den Metallsalzpigmenten können weitere Pigmente in der Papierstreichmasse enthalten sein. Die zusätzlichen Pigmente können z.B. ausgewählt sein aus der Gruppe bestehend aus Kieselsäuren, Aluminiumoxide, Aluminiumhydrat, Silikaten, Titandioxid, Zinkoxid, Kaolin, Tonerde, Talkum und Siliziumdioxid. Geeignete weitere Pigmente sind z.B. verfügbar als Capim® MP 50 (Clay), Hydragloss® 90 (Clay) oder Talcum C10.

### Wässrige Dispersion wasserlöslicher Copolymere

Die Papierstreichmasse enthält eine wässrige Dispersion von wasserlöslichen Copolymeren. Der Gehalt an Copolymer in der Papierstreichmasse beträgt vorzugsweise von 0,05 bis 5 Gew.-Teile, oder von 0,07 bis 2 Gew.-Teile oder von 0,1 bis 1,6 Gew.-Teile auf 100 Gew.-Teile Pigment (fest, d. h. ohne Wasser oder sonstige bei 21 °C, 1 bar flüssige Lösemittel). Wässrige Dispersionen wasserlöslicher Polymere sind herstellbar durch Wasser-in-Wasser Emulsionspolymerisation. Hierbei werden wasserlösliche Monomere in Gegenwart von geeigneten polymeren Stabilisatoren in wässrigem Medium polymerisiert. Die polymeren Stabilisatoren bewirken Inkompatibilitäten der sich bildenden wasserlöslichen Polymere mit dem wässrigen Medium, was zur Bildung einer dispergierten Polymerphase führt. Die Copolymere werden gebildet aus mindestens einer ersten Monomerart und mindestens einer zweiten Monomerart.

Die erste Monomerart, aus der die Copolymere gebildet sind, sind radikalisch polymerisierbare, ethylenisch ungesättigte, anionische Monomere. Die Menge der ersten Monomerart beträgt vorzugsweise 60 Gew.-%, oder mindestens 80 Gew.-%, und vorzugsweise bis 95 Gew.% oder bis 90 Gew.%, bezogen auf die Gesamtmenge an Monomeren.

Anionische Monomere sind solche, die anionische Gruppen, z. B. Carboxylatgruppen, Phosphonatgruppen oder Sulfonatgruppen enthalten. Bevorzugt sind Carboxylatgruppen. Das zugehörige Kation ist z. B. ein Metallkation. Das Copolymer enthält vorzugsweise mindestens 0,01 mol, oder mindestens 0,05 mol oder mindestens 0,1 mol Säuregruppen auf 100 g Copolymer; der Gehalt der Säuregruppen ist im allgemeinen nicht größer als 1,4 mol , insbesondere nicht größer als 1,2 mol, bzw. nicht größer als 1 mol Säuregruppen/100 g Copolymer. Vorzugsweise liegen mindestens 20 mol %, besonders bevorzugt mindestens 40 mol %, ganz besonders bevorzugt mindestens 60 mol %, in einer besonderen Ausführungsform 100 mol % der Säuregruppen in anionischer Form, d.h. als Salz vor. Das kationische Gegenion zu den anionischen Säuregruppen kann ein einwertiges oder mehrwertiges, z. B. zwei oder dreiwertiges Gegenion sein. Bevorzugt sind einwertige kationische Gegenionen. In Betracht kommen z. B. die Kationen der Alkalimetalle, insbesondere von Natrium oder Kalium. In Betracht kommen auch Stickstoffverbindungen, z. B. das Ammoniumkation und dessen Derivate, bevorzugt sind das Natrium- und Kaliumkation.

Als ethylenisch ungesättigte, anionische Monomere für die Herstellung der wässrigen Copolymerdispersionen kommen Monomere mit einer Säure- oder davon abgeleiteter Salzgruppe in Betracht. In Betracht kommen aber z. B. auch Monomere mit einer Säureanhydridgruppe, die später leicht in Säuregruppen und deren Salze überführt werden können, im Ergebnis handelt es sich bei letzterem dann nach der Umwandlung auch um ein Monomer mit einer Säure- oder Salzgruppe. Monomere mit einer Säure- oder Salzgruppe werden im nachfolgenden als anionische Monomere bezeichnet. Bevorzugte anionische Monomere sind z. B. Monomere mit einer Carbonsäuregruppe, einer Sulfonsäuregruppe oder einer Phosphonsäuregruppe; besonders bevorzugt sind Monomere mit einer Carbonsäuregruppe. Anionische Monomere sind beispielsweise monoethylenisch ungesättigte C₃- bis C₅-Carbonsäuren wie Acrylsäure, Methacrylsäure, Ethacrylsäure, Crotonsäure, Maleinsäure, Fumarsäure, Itaconsäure und/oder die Alkalimetall- oder Ammoniumsalze dieser Säuren. Monomere mit Phosphonsäure- bzw. Sulfonsäuregruppen sind beispielsweise Vinylphosphonsäure, Vinylsulfonsäure, Styrolsulfonsäure und Acrylamidosulfonsäuren, insbesondere Acrylamido-2-methylpropansulfonsäure. Zu den bevorzugt eingesetzten anionischen Monomeren gehören Acrylsäure, Methacrylsäure, Maleinsäure und Acrylamido-2-methylpropansulfonsäure. Besonders bevorzugt sind wässrige Dispersionen von Polymerisaten auf Basis von Acrylsäure. Die anionischen Monomeren können entweder allein oder auch in Mischung untereinander eingesetzt. werden. Beispiele hierfür sind z.B. Copolymerisate mit einer Mischung von Acrylsäure mit Methacrylsäure und/oder Maleinsäure als erste Monomerart.

Die zweite Monomerart, aus der die Copolymere gebildet sind, sind radikalisch polymerisierbare, ethylenisch ungesättigte, nichtionische Monomere. Bezogen auf die bei der Polymerisation insgesamt eingesetzten Monomeren beträgt die Menge der zweiten Monomerart vorzugsweise von 5 bis 40 Gew.%, oder von 10 bis 20 Gew.%, bezogen auf die Gesamtmenge an Monomeren. Das Verhältnis der Summe aller anionischen Monomere der ersten Monomerart zur Summe aller nichtionischen Monomere der zweiten Monomerart beträgt vorzugsweise von 95:5 bis 60:40 oder von 90:10 bis 80:20.

Monomere der zweiten Monomerart sind beispielsweise ausgewählt aus C1-C20-Alkyl(meth)acrylaten, Vinylestern von bis zu 20 C-Atome enthaltenden Carbonsäuren, Vinylaromaten mit bis zu 20 C-Atomen, Vinylhalogeniden, aliphatischen Kohlenwasserstoffen mit 2 bis 8 C-Atomen und ein oder zwei Doppelbindungen, Ethergruppen enthaltende Monomere, insbesondere Vinylether von 1 bis 10 C-Atome enthaltenden Alkoholen (kurz Ethermonomere) und Monomeren mit mindestens einem Stickstoffatom im Molekül (kurz Stickstoffmonomere) oder Mischungen dieser Monomeren. Stickstoffmonomere sind z.B. Vinylcarbonsäureamide, (Meth)acrylamid, N-Vinylformamid, N-Vinylacetamid, N-Methyl-N-vinylformamid, N-Methyl-N-vinylacetamid, N-Vinylpyrrolidon, N-Vinylcaprolactam, Vinylimidazol. Vinylcarbonsäureamide können unter Hydrolysebedingungen Carbonsäuregruppen abspalten und liegen dann als Vinylamine vor. Unter entsprechenden pH Bedingungen bilden Amine kationische Gruppen aus. Eine Abspaltung der Carbonsäuregruppen aus den Vinylcarbonsäureamiden ist daher im Rahmen dieser Erfindung nicht bevorzugt. Soweit eine derartige Abspaltung erfolgt, sollte die Anzahl der Aminogruppen, die kationisch sind oder eingestellt werden können, geringer sein als die Anzahl der anionischen Gruppen, insbesondere weniger als die Hälfte der Zahl der anionischen Gruppen betragen. Bevorzugt ist, dass die Vinylcarbonsäureamide zu mehr als 50 mol %, insbesondere zu mehr als 80 mol %, ganz besonders bevorzugt zu mehr als 95 mol %, bzw. zu 100 mol % im Polymer als Vinylcarbonsäureamide, d. h. ohne Abspaltung der Carbonsäuregruppe, einpolymerisiert sind.

Bevorzugte Monomere der zweiten Monomerart sind ausgewählt aus der Gruppe bestehend aus Acrylamid, Methacrylamid, Acrylsäureester von einwertigen Alkoholen mit 1 bis 20 C-Atomen, Methacrylsäureester von einwertigen Alkoholen mit 1 bis 20 C-Atomen, Vinylacetat und Vinylpropionat

Bevorzugte Copolymere sind Copolymere der Acrylsäure mit mindestens einem Comonomer, ausgewählt aus der Gruppe bestehend aus Acrylsäureestern von einwertigen Alkoholen mit 1 bis 20 C-Atomen und Methacrylsäureestern von einwertigen Alkoholen mit 1 bis 20 C-Atomen ist.

Die Copolymere haben vorzugsweise einen K-Wert von mindestens 60 oder mindestens 100, bis zu 400 z.B. 60 bis 250 oder 100 bis 200; bestimmbar nach H. Fikentscher in 5 Gew.%iger wässriger Kochsalzlösung bei 25°C, einer Polymerkonzentration von 0,1 Gew.-% und einem pH-Wert von 7. Aus Lichtstreuexperimenten folgt, dass ein K-Wert von 250 einem mittleren Molekulargewicht der Polymere von etwa 7 000 000 Dalton entspricht.

Die Polymerisation kann zusätzlich in Gegenwart mindestens eines Vernetzers durchgeführt werden. Man erhält dann Copolymere mit einer höheren Molmasse als beim Polymerisieren der anionischen Monomeren in Abwesenheit eines Vernetzers. Der Einbau eines Vernetzers in die Polymeren führt außerdem zu einer verringerten Löslichkeit der Polymeren in Wasser. In Abhängigkeit von der Menge an einpolymerisiertem Vernetzer werden die Polymeren wasserunlöslich, sind jedoch in Wasser quellbar. Zwischen vollständiger Löslichkeit der Polymeren in Wasser und dem Quellen der Polymeren in Wasser gibt es fließende Übergänge. Vernetzte Copolymere haben aufgrund ihres Quellvermögens in Wasser ein hohes Wasseraufnahmevermögen. Sie sind beispielsweise als Verdickungsmittel für wässrige Systeme wie Papierstreichmassen, einsetzbar.

In einer Ausführungsform der Erfindung sind die in der wässrigen Dispersion enthaltenen wasserlöslichen Copolymere nicht vernetzt ist. Die unvernetzten Copolymere haben den Vorteil, dass sie insbesondere bei geringer Dosierung eine stärkere Wirksamkeit in Papierstreichmassen aufweisen.

Falls dennoch ein Vernetzer eingesetzt wird, können hierfür alle Verbindungen verwendet werden, die über mindestens zwei ethylenisch ungesättigte Doppelbindungen im Molekül verfügen. Solche Verbindungen werden beispielsweise bei der Herstellung vernetzter Polyacrylsäuren wie superabsorbierenden Polymeren eingesetzt, vgl. EP-A 858 478, Seite 4, Zeile 30 bis Seite 5, Zeile 43. Beispiele für Vernetzer sind Triallylamin, Pentaerythrittriallylether, Methylenbisacrylamid, N,N'-Divinylethylenharnstoff, mindestens zwei Allylgruppen enthaltende Allylether oder mindestens zwei Vinylgruppen aufweisende Vinylether von mehrwertigen Alkoholen wie z.B. Sorbitol, 1,2-Ethandiol, 1,4-Butandiol, Trimethylolpropan, Glycerin, Diethylenglykol und von Zuckern wie Saccharose, Glucose, Mannose, vollständig mit Acrylsäure oder Methacrylsäure veresterte zweiwertige Alkohole mit 2 bis 4 C-Atomen wie Ethylenglykoldimethacrylat, Ethylenglykoldiacrylat, Butandioldimethacrylat, Butandioldiacrylat, Diacrylate oder Dimethacrylate von Polyethylenglykolen mit Molekulargewichten von 300 bis 600, ethoxylierte Trimethylolpropantriacrylate oder ethoxylierte Trimethylolpropan-trimethacrylate, 2,2-Bis(hydroxymethyl)butanoltrimethacrylat, Pentaerythrittriacrylat, Pentaerythrittetraacrylat und Triallylmethylammoniumchlorid. Falls bei der Herstellung der anionischen Dispersionen Vernetzer eingesetzt werden, so betragen die jeweils verwendeten Mengen an Vernetzer beispielsweise 0,0005 bis 5,0, vorzugsweise 0,001 bis 1,0 Gew.-%, bezogen auf die bei der Polymerisation insgesamt eingesetzten Monomeren. Bevorzugt verwendete Vernetzer sind Pentaerythrittriallylether, N,N'-Divinylethylenharnstoff, mindestens zwei Allylgruppen enthaltende Allylether von Zuckern wie Saccharose, Glucose oder Mannose und Triallylamin und/oder ethoxyliertes Trimethylolpropantriacrylat sowie Mischungen dieser Verbindungen.

Die Polymerisation kann zusätzlich in Gegenwart mindestens eines Kettenüberträgers durchgeführt werden. Man erhält dann Polymere, die eine niedrigere Molmasse und kleinere K-Werte besitzen als ohne Kettenüberträger hergestellte Polymere. Beispiele für Kettenüberträger sind Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff, Aldehyde, organische Säuren wie Ameisensäure, Natriumformiat oder Ammoniumformiat, Alkohole wie insbesondere Isopropanol sowie Phosphorverbindungen, z.B. Natriumhypophosphit. Man kann einen einzigen oder mehrere Kettenüberträger bei der Polymerisation einsetzen. Falls man sie bei der Polymerisation verwendet, setzt man sie z.B. in einer Menge von 0,01 bis 5,0, vorzugsweise 0,2 bis 1 Gew.-%, bezogen auf die gesamten Monomeren, ein. Die Kettenüberträger werden vorzugsweise zusammen mit mindestens einem Vernetzer bei der Polymerisation eingesetzt. Durch Variation der Menge und des Verhältnisses von Kettenüberträger und Vernetzer ist es möglich, die Rheologie der entstehenden Polymerisate zu steuern. Kettenüberträger und/oder Vernetzer können bei der Polymerisation beispielsweise im wässrigen Polymerisationsmedium vorgelegt oder zusammen oder getrennt von den Monomeren je nach Fortschreiten der Polymerisation zum Polymerisationsansatz dosiert werden.

In einer Ausführungsform der Erfindung sind die in der wässrigen Dispersion enthaltenen wasserlöslichen Copolymere ohne Verwendung eines Reglers hergestellt. Die ohne Regler hergestellten Copolymere mit höheren K-Werten (z.B. größer 100) haben den Vorteil, dass sie ein besseres Wasserretentionsverhalten aufweisen. Copolymere mit hohen K-werten haben im Vergleich zu den entsprechenden Homopolymeren mit vergleichbaren K-Werten den Vorteil, dass Sie weniger stark zum unerwünschten Gelieren der Streichfarben neigen.

Bei der Polymerisation verwendet man üblicherweise Initiatoren, die unter den Reaktionsbedingungen Radikale bilden. Geeignete Polymerisationsinitiatoren sind z.B. Peroxide, Hydroperoxide, Wasserstoffperoxid, Natrium- oder Kaliumpersulfat, Redoxkatalysatoren und Azoverbindungen wie 2,2-Azobis(N,N- dimethylenisobutyramidin) dihydrochlorid, 2,2-Azobis(4-methoxy-2,4-dimethylvaleronitril), 2,2-Azobis(2,4-dimethylvaleronitril) und 2,2-Azobis(2-amidinopropan)dihydrochlorid. Die Initiatoren werden in den bei der Polymerisation üblichen Mengen eingesetzt. Bevorzugt werden Azo-starter als Polymerisationsinitiatoren verwendet. Man kann die Polymerisation jedoch auch mit Hilfe energiereicher Strahlen wie Elektronenstrahlen oder durch Bestrahlen mit UV-Licht initiieren.

Die zur Herstellung der Papierstreichmassen verwendeten wässrigen Dispersionen der wasserlöslichen anionischen Polymeren haben eine Polymerkonzentration an anionischen Polymeren von beispielsweise 1 bis 70 Gew.-%, oder 5 bis 50 Gew.-%, oder 10 bis 25 Gew.-%, oder 15 bis 20 Gew.-%. Bevorzugt sind stabile wässrige Dispersionen von anionischen Copolymerisaten mit einer Teilchengröße von 0,1 bis 200 µm, vorzugsweise 0,5 bis 70 µm. Die Teilchengröße kann z. B. durch optische Mikroskopie, Lichtstreuung oder Gefrierbruchelektronenmikroskopie bestimmt werden.

Als Neutralisationsmittel für die Säuregruppen aufweisenden Copolymerisate kommen beispielsweise Alkalimetall-, Erdalkalimetall- und/oder Aminbasen in Betracht. Besonders bevorzugte Neutralisationsmittel sind Natronlauge, Kalilauge, Ammoniak, Ethanolamin, Diethanolamin oder Triethanolamin. Außerdem können alle anderen Amine oder auch Polyamine wie Diethylentriamin, Triethylentetramin, Polyethylenimine und/oder Polyvinylamine als Neutralisationsmittel verwendet werden. Die Menge an Neutralisationsmittel, die eingesetzt wird, richtet sich im Wesentlichen nach der gewünschten Viskosität, die die Papierstreichmasse haben soll. Diese Viskosität ist abhängig vom pH-Wert, der vorzugsweise in dem Bereich von 6 bis 10, insbesondere von 7 bis 9,5 liegt.

### Polymere Stabilisatoren

Die Herstellung der Copolymeren erfolgt in wässrigem Medium in Gegenwart mindestens eines polymeren Stabilisators für Wasser-in-Wasser Polymerdispersionen. Bevorzugte Stabilisatoren sind ausgewählt aus wasserlöslichen Polymeren der nachfolgenden Gruppen (a) und (b). Besonders bevorzugt ist die Verwendung von mindestens einem wasserlöslichen Stabilisator der Gruppe (a) in Kombination mit mindestens einem wasserlöslichen Stabilisator der Gruppe (b),
wobei Gruppe a) besteht aus
a1) Pfropfpolymerisate von Vinylacetat und/oder Vinylpropionat auf (i) Polyethylenglykolen oder (ii) ein- oder beidseitig mit Alkyl-, Carboxyl- oder Aminogruppen endgruppenverschlossenen Polyethylenglykolen oder Polypropylenglykolen;
a2) Polyalkylenglykole, insbesondere solche mit Molmassen M_{N} von 1000 bis 100000;
a3) ein- oder beidseitig mit Alkyl-, Carboxyl- oder Aminogruppen endgruppenverschlossene Polyalkylenglykole mit Molmassen von vorzugsweise M_{N} von 1000 bis 100 000;
a4) Copolymerisate aus Alkylpolyalkylenglykolacrylaten oder Alkylpolyalkylenglykolmethacrylaten und Acrylsäure und/oder Methacrylsäure;
und wobei Gruppe b) besteht aus wasserlöslichen Copolymeren der Gruppe der
b1) wenigstens teilweise hydrolysierten Copolymerisaten aus Vinylalkylethern und Maleinsäureanhydrid, die wenigstens teilweise in der z.B. mit Alkalimetallhydroxiden oder Ammoniumbasen neutralisierten Salzform vorliegen können;
b2) wasserlösliche Stärke (z.B. Kartoffelstärke), insbesondere aus der Gruppe kationisch modifizierter Stärke, anionisch modifizierter Stärke, abgebauter Stärke, z.B. thermisch, oxidativ oder enzymatisch abgebauter Stärke, und Maltodextrin;
b3) anionischen Homo- und Copolymerisaten, ausgewählt aus der Gruppe der
   - Homo- und Copolymerisate aus ausschließlich anionischen Monomeren;
   - Copolymerisate aus anionischen und kationischen und gegebenenfalls neutralen Monomeren, wobei der Anteil der einpolymerisierten anionischen Monomeren größer ist als der der kationischen Monomeren und
   - Copolymerisate aus mindestens einem anionischen Monomer und mindestens einem Monomer aus der Gruppe der Ester von anionischen Monomeren mit einwertigen Alkoholen, Styrol, N-Vinylpyrrolidon, N-Vinylcaprolactam, N-Vinylimidazol, N-Vinylformamid, Acrylamid, Methacrylamid, Vinylacetat und Vinylpropionat;
   - wasserlösliche oder wasserdispergierbare Copolymere aus (1) anionischen monoethylenisch ungesättigten Monomeren und (2) nichtionischen monoethylenisch ungesättigten Monomeren, wobei der Anteil der einpolymerisierten anionischen Monomeren mindestens genauso groß ist wie derjenige der nichtionischen Monomeren;
b4) kationischen Copolymeren aus nichtionischen monoethylenisch ungesättigten Monomeren und kationischen monoethylenisch ungesättigten Monomeren und gegebenenfalls anionischen monoethylenisch ungesättigten Monomeren, wobei jedenfalls die Anzahl der kationischen Gruppen größer ist als die Anzahl der anionischen Gruppen.

Die erfindungsgemäß zu verwendenden, in Form einer Dispersion vorliegenden Copolymerisate werden im Folgenden auch "erfindungsgemäße Emulsionspolymerisate" oder als "W/W-Polymerisate" oder als "W/W-Emulsionspolymerisate" bezeichnet. Die Polymere der Gruppen a) und b) werden im Folgenden auch als "Stabilisatoren" bezeichnet. Es ist bevorzugt, dass die W/W- Emulsionspolymerisate und die auch als Stabilisatoren bezeichneten Polymere a) und Polymere b) wasserlöslich sind. Unter wasserlöslichen Polymeren werden dabei Polymere verstanden, die bei 20°C und Normaldruck in einer Menge von wenigstens 1 g in 1 Liter voll entsalztem Wasser klar löslich sind.

Die Polymerisation erfolgt in einer wässrigen Lösung, die vorzugsweise frei von Neutralsalzen ist. Die Menge an polymeren Stabilisatoren der Gruppe (a) beträgt beispielsweise von 0,5 bis 39,5 Gew.-% oder von 1 bis 30 Gew.% oder von 2 bis 25 Gew.-%, bezogen auf die gesamte Dispersion. Die Menge an polymeren Stabilisatoren der Gruppe (b) beträgt beispielsweise von 0,5 bis 15, oder von 1 bis 12 Gew.-%. Das Verhältnis der Komponenten (a) und (b) in den Stabilisatormischungen kann in einem weiten Bereich variiert werden. Es kann beispielsweise 1 : 10 bis 50 : 1, oder 1 : 5 bis 20 : 1 oder 1 : 4 bis 15 : 1 betragen.

Die wässrigen Dispersionen haben beispielsweise bei einem pH-Wert von 2,5 Viskositäten in dem Bereich von 200 bis 100 000 mPa s, vorzugsweise 200 bis 20 000 mPa s, bevorzugt 200 bis 10 000 mPa s (gemessen in einem Brookfield-Viskosimeter bei 20°C, Spindel 6, 100 UpM).

### Polymere der Gruppe a)

Zu den Stabilisatoren der Gruppe (a) gehören a1) Pfropfpolymerisate von Vinylacetat und/oder Vinylpropionat auf (i) Polyethylenglykolen oder (ii) ein- oder beidseitig mit Alkyl-, Carboxyl- oder Aminogruppen endgruppenverschlossenen Polyethylenglykolen oder Polypropylenglykolen, Copolymerisate aus Alkylpolyalkylenglykol(meth)acrylaten und (Meth)acrylsäure sowie außerdem Polyalkylenglykole und ein- oder beidseitig mit Alkyl-, Carboxyl- oder Aminogruppen endgruppenverschlossene Polyalkylenglykole.

Polyalkylenglykole werden beispielsweise in der WO 03/046024, Seite 4, Zeile 37 bis Seite 8, Zeile 9, beschrieben. Die darin beschriebenen Polyalkylenglykole können entweder direkt als Stabilisator der Gruppe (a) eingesetzt oder dahingehend modifiziert werden, dass man auf 100 Gewichtsteile der Polyalkylenglykole beispielsweise 10 bis 1000, vorzugsweise 30 bis 300 Gewichtsteile Vinylacetat und/oder Vinylpropionat pfropft. Bevorzugt setzt man als Pfropfgrundlage Polyethylenglykol mit einem Molekulargewicht M_{N} von 1000 bis 100 000 ein und pfropft darauf Vinylacetat.

In Betracht kommende Stabilisatoren der Gruppe (a) sind außerdem a4) Copolymerisate aus Alkylpolyalkylenglykolacrylaten oder Alkylpolyalkylenglykolmethacrylaten und Acrylsäure und/oder Methacrylsäure. Sie werden hergestellt, indem man zunächst Additionsprodukte von Ethylenoxid und/oder Propylenoxid an beispielsweise C₁- bis C₁₈-Alkohole mit Acrylsäure und/oder Methacrylsäure verestert und diese Ester dann mit Acrylsäure und/oder Methacrylsäure copolymerisiert. Die üblicherweise eingesetzten Copolymerisate enthalten beispielsweise 5 bis 60, vorzugsweise 10 bis 35 Gew.-% einpolymerisierte Einheiten von Alkylpolyalkylenglykol(meth)acrylaten und 95 bis 40, vorzugsweise 90 bis 65 Gew.-% einpolymerisierte Einheiten an (Meth)Acrylsäure. Sie haben meistens Molmassen Mw von 2000 bis 50 000, vorzugsweise 5000 bis 20 000. Diese Copolymerisate können in Form der freien Säuregruppen oder auch in vollständig oder teilweise neutralisierter Form bei der Herstellung der Dispersionen eingesetzt werden. Die Carboxylgruppen der Copolymerisate werden vorzugsweise mit Natronlauge oder Ammoniak neutralisiert.

Die Polyalkylenglykole a2) sowie die ein- oder beidseitig mit Alkyl-, Carboxyl- oder Aminogruppen endgruppenverschlossenen Polyalkylenglykole a3) haben beispielsweise Molmassen Mₙ von 100 bis 100 000, bevorzugt von 300 bis 80 000, oder von 600 bis 50 000 oder von 1 000 bis 50 000. Solche Polymere werden beispielsweise in der oben zitierten WO 03/046024, Seite 4, Zeile 37 bis Seite 8, Zeile 9, beschrieben. Bevorzugte Polyalkylenglykole sind z.B. Polyethylenglykol, Polypropylenglykol sowie Blockcopolymere aus Ethylenoxid und Propylenoxid. Die Blockcopolymere können Ethylenoxid und Propylenoxid in beliebigen Mengen und in beliebiger Reihenfolge einpolymerisiert enthalten. Die OH-Endgruppen der Polyalkylenglykole können gegebenenfalls ein- oder beidseitig mit Alkyl-, Carboxyl- oder Aminogruppen endgruppenverschlossen sein, wobei als Endgruppe vorzugsweise eine Methylgruppe in Betracht kommt.

Besonders bevorzugt eingesetzte Stabilisatoren der Gruppe a2) sind Copolymere aus Ethylenoxid und Propylenoxid. Insbesondere bevorzugt sind Blockcopolymere aus Ethylenoxid und Propylenoxid mit einer Molmasse Mₙ von 500 bis 20 000 g/mol und einem Gehalt an Ethylenoxideinheiten von 10 bis 80 mol-%. Besonders bevorzugt eingesetzte Stabilisatoren der Gruppe a2) sind Triblockcopolymere der allgemeinen Formel (EO)ₓ(PO)_{y}(EO)_{z}, wobei x, y und z Zahlen größer Null bedeuten. Die OH-Endgruppen dieser Polyalkylenglykole können gegebenenfalls ein- oder beidseitig mit Alkyl-, Carboxyl- oder Aminogruppen endgruppenverschlossen sein, wobei als Endgruppe vorzugsweise eine Methylgruppe in Betracht kommt. Die Molmasse bevorzugter Polyalkylenglykole liegt im Bereich von 300 bis 20000, bevorzugt von 900 bis 9000 g/mol, mit einem Anteil an Ethylenoxid im Bereich von 10 bis 90 Gew.-%. Solche Polyalkylenglykole sind beispielsweise als Pluronic^{®}-Marken kommerziell erhältlich. Die Pluronic^{®} PE-Marken sind schaumarme, nichtionische Tenside, die durch Copolymerisation von Propylenoxid und Ethylenoxid hergestellt werden. Wie die folgende allgemeine Formel (I)zeigt, handelt es sich bei den Pluronic^{®} PE Marken um Blockpolymere, bei denen Polypropylenglykol den zentralen Molekülteil bildet:

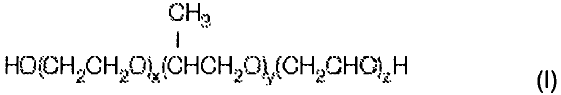

Besonders bevorzugt sind die Pluronic-PE-Typen wie beispielsweise Pluronic^{®} PE 3100, Pluronic^{®} PE 3500, Pluronic^{®} PE 4300, Pluronic^{®} PE 6100, Pluronic^{®} PE 6200, Pluronic^{®} PE 6120, Pluronic^{®} PE 6200, Pluronic^{®} PE 6400, Pluronic^{®} PE 7400, Pluronic^{®} PE 8100, Pluronic^{®} PE 9200, Pluronic^{®} PE 9400, Pluronic^{®} PE 10100, Pluronic^{®} PE 10300, Pluronic^{®} PE 10400, Pluronic^{®} PE 10500, Pluronic^{®} PE 10500 Lösung, Pluronic^{®} PE 3500.

Die folgende Tabelle gibt eine Übersicht über die als a) geeigneten Pluronic^{®}-Typen.

| Pluronic^{®} | Ziffer | Molare Masse des Polypropylenglykolblocks (g/mol) | Ziffer | Anteil an Polyethylenglykol im Molekül (%) |
|---|---|---|---|---|
| PE 3100 | 3 | 850 | 1 | 10 |
| PE 3500 | 3 | 850 | 5 | 50 |
| PE 4300 | 4 | 1100 | 3 | 30 |
| PE 6100 | 6 | 1750 | 1 | 10 |
| PE 6120 | 6 | 1750 | 12 | 12 |
| PE 6200 | 6 | 1750 | 2 | 20 |
| PE 6400 | 6 | 1750 | 4 | 40 |
| PE 6800 | 6 | 1750 | 8 | 80 |
| PE 7400 | 7 | 2100 | 4 | 40 |
| PE 8100 | 8 | 2300 | 1 | 10 |
| PE 9200 | 11 | 2750 | 2 | 20 |
| PE 9400 | 9 | 2750 | 4 | 40 |
| PE 10100 | 10 | 3250 | 1 | 10 |
| PE 10300 | 10 | 3250 | 3 | 30 |
| PE 10400 | 10 | 3250 | 4 | 40 |
| PE 10500 | 10 | 3250 | 5 | 50 |

In einer bevorzugten Ausführungsform der Erfindung werden als polymere Stabilisatoren a3) Mischungen aus vorgenannten Polyalkylenglykolen eingesetzt. Bevorzugte Mischungen sind beispielsweise Mischungen unterschiedlicher Pluronic-Marken, wobei das Mischungsgewichtsverhältnis im Bereich von 5:1 bis 1:5, bevorzugt im Bereich von 2:1 bis 1:2 und insbesondere im Bereich von 1,3:1 bis 1:1,3 liegt. Besonders gut geeignet zur Herstellung der W/W-Emulsionspolymerisate für die erfindungsgemäße Verwendung sind Mischungen die Pluronic^{®}PE 4300 und Pluronic^{®}PE 6200 umfassen oder daraus bestehen.

Als Polymere der Gruppe (b) sind geeignet:
b1) wenigstens teilweise hydrolysierte Copolymerisate aus Vinylalkylethern und Maleinsäureanhydrid, die wenigstens teilweise in Form der Alkali- oder Ammoniumsalze vorliegen können. Die Alkylgruppe der Vinylalkylether weist bevorzugt 1 bis 4 Kohlenstoffatome auf. Die Copolymerisate sind erhältlich durch Copolymerisieren der Vinylalkylether mit Maleinsäureanhydrid und anschließende teilweise oder vollständige Hydrolyse der Anhydridgruppen zu Carboxylgruppen und gegebenenfalls teilweise oder vollständige Neutralisation der Carboxylgruppen unter Bildung der Salze. Besonders bevorzugte Polymere der Gruppe (b) sind wenigstens teilweise oder vollständig hydrolysierte Copolymerisate aus Vinylmethylether und Maleinsäureanhydrid, die wenigstens teilweise in Form ihrer Alkali- oder Ammoniumsalze vorliegen.
b2) Stärken aus der Gruppe kationisch modifizierter Stärke, anionisch modifizierter Stärke, abgebauter Stärke und Maltodextrin. Stärken können gewonnen werden aus Bohnen, Erbsen, Gerste, Hafer, Hirse wie beispielsweise Wachshirse, Kartoffeln, Mais wie beispielsweise Amylomais oder Wachsmais, Maniok, Reis wie beispielsweise Wachsreis, Roggen oder Weizen. Bevorzugte Stärken sind wasserlösliche Stärken, insbesondere wasserlösliche Kartoffelstärken. Beispiele für kationisch modifizierte Kartoffelstärken sind die Handelsprodukte Amylofax^{®}15 und Perlbond^{®}970. Eine geeignete anionisch modifizierte Kartoffelstärke ist Perfectamyl^{®}A 4692. Hier besteht die Modifizierung im Wesentlichen in einer Carboxylierung von Kartoffelstärke. C*Pur^{®}1906 ist ein Beispiel für eine enzymatisch abgebaute Kartoffelstärke und Maltodextrin C 01915 für eine hydrolytisch abgebaute Kartoffelstärke. Von den genannten Stärken wird vorzugsweise Maltodextrin eingesetzt.
b3) anionische Copolymere ausgewählt aus der Gruppe der
   b3-1) Homo- und Copolymerisate umfassend oder bestehend aus anionischen Monomeren,
   b3-2) Copolymerisaten aus anionischen und kationischen und gegebenenfalls neutralen Monomeren, wobei der Anteil der einpolymerisierten anionischen Monomeren grö-βer ist als der der kationischen Monomeren und
   b3-3) Copolymerisaten aus mindestens einem anionischen Monomer und mindestens einem Monomer aus der Gruppe der Ester von anionischen Monomeren mit einwertigen Alkoholen, Styrol, N-Vinylpyrrolidon, N-Vinylcaprolactam, N-Vinylimidazol, N-Vinylformamid, Acrylamid, Methacrylamid, Vinylacetat und Vinylpropionat.

Als Polymere der Gruppe (b3-1) verwendet man beispielsweise mindestens ein Homopolymer aus einer ethylenisch ungesättigten C₃- bis C₅-Carbonsäure, Vinylsulfonsäure, Styrolsulfonsäure, Acrylamidomethylpropansulfonsäure, Vinylphosphonsäure, deren partiell oder vollständig mit Alkalimetall- und/oder Ammoniumbasen neutralisierten Salze und/oder mindestens ein Copolymer aus diesen Monomeren. Beispiele für ethylenisch ungesättigte Carbonsäuren, die für die Herstellung der wässrigen Dispersionen eingesetzt werden, wurden bereits genannt. Diese anionischen Monomeren können demnach ebenfalls zur Herstellung der Polymeren (b) der Stabilisatormischungen eingesetzt werden. Bevorzugt kommen hierfür Acrylsäure, Methacrylsäure, Acrylamidomethylpropansulfonsäure und Gemische dieser Monomere in beliebigen Verhältnissen in Betracht. Besonders geeignet sind Copolymere aus Methacrylsäure und Acrylamidomethylpropansulfonsäure, wobei in einer bevorzugten Ausführungsform das Molverhältnis der zur Herstellung der Copolymere eingesetzten Monomere Methacrylsäure zu Acrylamidomethylpropansulfonsäure im Bereich von 9:1 bis 1:9, bevorzugt von 9:1 bis 6:4 liegt.

Weitere geeignete Polymere der Gruppe (b3-2) der Stabilisatormischung sind Copolymerisate aus
(i) mindestens einer ethylenisch ungesättigten C₃- bis C₅-Carbonsäure, Vinylsulfonsäure, Styrolsulfonsäure, Acrylamidomethylpropansulfonsäure, Vinylphosphonsäure und/oder deren Alkalimetall- und/oder Ammoniumsalze,
(ii) mindestens einem kationischen Monomer aus der Gruppe von partiell oder vollständig neutralisierten Dialkylaminoalkyl(meth)acrylate, partiell oder vollständig quaternierten Dialkylaminoalkyl(meth)acrylate, Dialkylaminoalkyl(meth)acrylamide in quaternierter oder neutralisierter Form, Dialkyldiallylammoniumhalogenide und quaterniertem n-Vinylimidazol und gegebenenfalls
(iii) mindestens einem neutralen Monomeren,
wobei der Anteil der einpolymerisierten anionischen Monomeren größer ist als der der kationischen Monomeren.

Beispiele für anionische Monomere (i) wurden zuvor bereits genannt. Als kationische Monomere (ii) kommen beispielsweise Dialkylaminoalkyl(meth)acrylate wie Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat, Dialkyldiallylammoniumhalogenide wie Dimethyldiallylammoniumchlorid und Diethyldiallylammoniumchlorid, N-Vinylimidazol, quaterniertes N-Vinylimidazol und Dialkylaminoalkylacrylamide wie Dimethylaminoethylacrylamid oder Dimethylaminoethylmethacrylamid in Betracht. Basische Monomere wie Dimethylaminoethylacrylat oder Dimethylaminoethylmethacrylat können sowohl in Form der freien Basen als auch in teilweise oder vollständig mit Säuren wie Salzsäure, Schwefelsäure, Ameisensäure und p-Toluolsulfonsäure neutralisierter Form eingesetzt werden. Die basischen Monomeren können außerdem teilweise oder vollständig durch die Umsetzung mit C₁- bis C₁₈-Alkylhalogeniden und/ oder C₁- bis C₁₈-Alkyl oder C₁- bis C₁₈-Alkylarylhalogeniden quaterniert werden und in dieser Form bei der Polymerisation eingesetzt werden. Beispiele hierfür sind die vollständig mit Methylchlorid quaternierten Dimethylaminoethyl(meth)acrylate wie Dimethylaminoethylacrylat-methochlorid oder Dimethylaminoethylmethacrylat-methochlorid. Die Polymeren der Gruppe (b) können als kationogene Gruppen auch Vinylamineinheiten enthalten. Solche Polymeren sind z.B. dadurch erhältlich, dass man N-Vinylformamid gegebenenfalls zusammen mit mindestens einem anionischen wasserlöslichen Monomer polymerisiert und die Polymeren anschließend unter teilweiser Abspaltung von Formylgruppen zu Vinylamineinheiten enthaltenden Polymeren hydrolysiert.

Als neutrale Monomere (iii) können beispielsweise die Ester aus anionischen Monomeren, insbesondere aus C₃- bis C₅-Carbonsäuren, und einwertigen Alkoholen mit 1 bis 20 C-Atomen wie insbesondere Methylacrylat, Methylmethacrylat, Ethylacrylat, n-, sek.- und tert.-Butylacrylat, 2-Ethylhexylacrylat, Ethylmethacrylat, Isopropylacrylat, Isopropylmethacrylat und n-, sek.- und tert.-Butylmethacrylat, sowie Acrylamid, Methacrylamid, Acrylnitril, Methacrylnitril, N-Vinylpyrrolidon, N-Vinylimidazol, N-Vinylformamid, Vinylacetat, Vinylpropionat und Styrol eingesetzt werden.

Bei den als Komponente (b3-2) in Betracht kommenden amphoteren Copolymeren ist der Anteil der einpolymerisierten anionischen Monomeren immer größer ist als der der kationischen Monomeren. Diese Copolymeren tragen somit immer eine anionische Ladung.

Als Copolymere der Gruppe (b3-3) kommen außerdem Copolymerisate aus
(i) mindestens einem anionischen Monomer und
(ii) mindestens einem Monomer aus der Gruppe der Ester von ethylenisch ungesättigten Säuren mit einwertigen Alkoholen, Styrol, N-Vinylpyrrolidon, N-Vinylcaprolactam, N-Vinylimidazol, N-Vinylformamid, Acrylamid, Methacrylamid, Vinylacetat und Vinylpropionat
in Betracht, z.B. Copolymere aus Acrylsäure, Methylacrylat und N-Vinylpyrrolidon oder Copolymere aus Methacrylsäure, Acrylamidomethylpropansulfonsäure, Methylacrylat und Vinylimidazol.

Die Polymere (b3) können die in Betracht kommenden Monomeren in beliebigen Verhältnissen einpolymerisiert enthalten, wobei lediglich die amphoteren Copolymerisate so aufgebaut sind, dass sie immer eine anionische Ladung tragen.
b4) kationische Copolymere aus nichtionischen monoethylenisch ungesättigten Monomeren und kationischen monoethylenisch ungesättigten Monomeren und gegebenenfalls anionischen monoethylenisch ungesättigten Monomeren, wobei die Anzahl der kationischen Gruppen größer ist als die Anzahl der anionischen Gruppen.

Als Polymere der Gruppe (b4) verwendet man z.B. Copolymere aus
(b4-1) wasserlöslichen, nichtionischen, monoethylenisch ungesättigten Monomeren,
(b4-2) wasserlöslichen, kationischen, monoethylenisch ungesättigten Monomeren und gegebenenfalls
(b4-3) wasserlöslichen, anionischen, monoethylenisch ungesättigten Monomeren, wobei der Anteil der einpolymerisierten kationischen Monomere größer ist als der der anionischen Monomeren.

Beispiele für wasserlösliche, nichtionische Monomere (b4-1) sind Acrylamid, Methacrylamid, N-Vinylformamid, N-Vinylpyrrolidon und N-Vinylcaprolactam. Prinzipiell eignen sich als Monomere der Gruppe (b4) alle nichtionischen, monoethylenisch ungesättigten Monomere, die eine Wasserlöslichkeit von mindestens 100 g/l bei einer Temperatur von 20°C haben. Besonders bevorzugt sind Monomere (b1), die in jedem Verhältnis mit Wasser mischbar sind und klare wässrige Lösungen bilden wie Acrylamid oder N-Vinylformamid.

Wasserlösliche, kationische, monoethylenisch ungesättigte Monomere (b4-2) sind beispielsweise Dialkylaminoalkyl(meth)acrylate wie Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat, Dialkyldiallylammoniumhalogenide wie Dimethyldiallylammoniumchlorid und Diethyldiallylammoniumchlorid, N-Vinylimidazol und quaterniertes N-Vinylimidazol. Basische Monomere wie Dimethylaminoethylacrylat oder Dimethylaminoethylmethacrylat, können sowohl in Form der freien Basen als auch in teilweise oder vollständig mit Säuren wie Salzsäure, Schwefelsäure, Ameisensäure und p-Toluol-sulfonsäure neutralisierter Form eingesetzt werden. Die basischen Monomeren können außerdem teilweise oder vollständig durch Umsetzung mit C₁- bis C₁₈-Alkylhalogeniden und/oder C₁- bis C₁₈-Alkyl C₁- bis C₁₈-Alkylarylhalogeniden quaterniert sein und in dieser Form bei der Polymerisation eingesetzt werden. Beispiele hierfür sind die vollständig mit Methylchlorid quaternierten Dimethylaminoethyl(meth)acrylate wie Dimethylaminoethylacrylat-methochlorid oder Dimethylaminoethylmethacrylat-methochlorid. Die Polymeren der Gruppe (b4) können als kationische Gruppe auch Vinylamineinheiten enthalten. Solche Polymeren sind z.B. dadurch erhältlich, dass man N-Vinylformamid gegebenenfalls zusammen mit mindestens einem anionischen wasserlöslichen Monomer polymerisiert und die Polymeren anschließend unter teilweiser Abspaltung von Formylgruppen zu Vinylamineinheiten enthaltenden Polymeren hydrolysiert.

Die Polymeren der Gruppe (b4) können gegebenenfalls noch mindestens ein anionisches monoethylenisch ungesättigtes Monomer (b4-3) einpolymerisiert enthalten. Beispiele für solche Monomere sind die zuvor bereits genannten anionischen Monomeren, die wasserlösliche Polymere bilden wie beispielsweise Acrylsäure, Methacrylsäure, Vinylsulfonsäure, Vinylphosphonsäure, Maleinsäure, Fumarsäure, Crotonsäure, Itaconsäure sowie die Alkalimetall- und Ammoniumsalze dieser Säuren. Beispiele für Copolymere der Gruppe (b4) sind Copolymerisate aus
(b4-1) Acrylamid, Methacrylamid, N-Vinylformamid, N-Vinylpyrrolidon und/oder N-Vinylcaprolactam,
(b4-2) Dialkylaminoalkylacrylat, Dialkylaminoalkylmethacrylat, partiell oder vollständig neutralisierte Dialkylaminoalkyl(meth)acrylate, quaternierte Dialkylaminoalkyl-(meth)acrylate, Dialkyldiallylammoniunhalogenide, N-Vinylimidazol und quaterniertem N-Vinylimidazol und gegebenenfalls
(b4-3) Acrylsäure, Methacrylsäure, Vinylsulfonsäure, Vinylphosphonsäure, Maleinsäure, Fumarsäure, Crotonsäure, Itaconsäure sowie die Alkalimetall- und Ammoniumsalze dieser Säuren.

Die Polymere (b4) enthalten beispielsweise
(b4-1) 2 bis 90, vorzugsweise 20 bis 80 und besonders bevorzugt 35 bis 70 mol-% mindestens eines nichtionischen Monomers
(b4-2) 2 bis 90, vorzugsweise 20 bis 80 und besonders bevorzugt 35 bis 70 mol% mindestens eines kationischen Monomers
   und
(b4-3) 0 bis 48,9 mol-%, vorzugsweise 0 bis 30 und besonders bevorzugt 0 bis 10 mol-% mindestens eines anionischen Monomers in einpolymerisierter Form, wobei der Anteil der kationischen Monomereinheiten größer ist als der der anionischen Monomereinheiten.

Einzelne Beispiele für Polymere (b4) sind Copolymerisate aus Acrylamid und Dimethylaminoethylacrylatmethochlorid, Copolymerisate aus Acrylamid und Dimethylaminoethylmethacrylatmethochlorid, Copolymerisate aus Acrylamid und Dimethylaminopropylacrylatmethochlorid, Copolymerisate aus Methacrylamid und Dimethylaminoethylmethacrylmethochlorid, Copolymerisate aus Acrylamid, Dimethylaminoethylacrylatmethochlorid und Acrylsäure, Copolymerisate aus Acrylamid, Dimethylaminoethylmethacrylatmethochlorid und Methacrylsäure und Copolymerisate aus Acrylamid, Dimethylaminoethylacrylatmethochlorid und Acrylsäure.

Die Polymeren (b) können auch mit Hilfe des K-Wertes charakterisiert werden. Sie haben beispielsweise einen K-Wert von 15 bis 200 , vorzugsweise 30 bis 150 und besonders bevorzugt 45 bis 110 (bestimmt nach H. Fikentscher, Cellulose-Chemie, Band 13, 58 - 64 und 71 - 74 (1932) in 3 gew.-%iger wässriger Kochsalzlösung bei 25°C, einer Polymerkonzentration von 0,1 Gew.-% und einem pH-Wert von 7). Die mittlere Molmasse M_{w} der Polymeren der Gruppe (b) der Stabilisatormischung beträgt beispielsweise bis zu 1,5 Millionen, oder bis 1,2 Millionen und liegt vorzugsweise in dem Bereich von 1000 bis 1 Million, oder von 1500 bis 100 000 oder von 2000 bis 70 000 (bestimmt nach der Methode der Lichtstreuung).

In einer bevorzugten Ausführungsform der Erfindung enthalten die wässrigen Dispersionen der Copolymerisate vorzugsweise als Stabilisator eine Kombination aus
(a2) mindestens einem Blockcopolymer aus Ethylenoxid und Propylenoxid und
(b3) mindestens einem Copolymerisat ausgewählt aus der Gruppe bestehend aus Methacrylsäure und Acrylamidomethylpropansulfonsäure, Copolymerisat aus Methylacrylat, Acrylamidomethylpropansulfonsäure und quaterniertem Vinylimidazol mit einer insgesamt anionischen Ladung, Copolymerisat aus Acrylamidomethylpropansulfonsäure, Acrylsäure, Methylacrylat und Styrol, Polyacrylsäure, Polymethacrylsäure und Polyacrylamidomethylpropansulfonsäure.

In einer bevorzugten Ausführungsform der Erfindung enthalten die wässrigen Dispersionen der anionischen Polymerisate vorzugsweise als Stabilisator eine Kombination aus
(a1) mindestens einem Pfropfpolymerisat von Vinylacetat auf Polyethylenglykolen eines Molekulargewichts M_{N} von 1000 bis 100 000 und
(b1) mindestens einem wenigstens teilweise hydrolysierten Copolymerisat aus Vinylalkylether, bevorzugt Vinylmethylether und Maleinsäureanhydrid, das wenigstens teilweise in Salzform, z.B. als Natrium-, Kalium- oder Ammoniumsalz vorliegen kann.

Bei einer weiteren bevorzugten Ausführungsform der Erfindung verwendet man folgende Kombination aus Polymeren:
(a4) Copolymerisate aus Alkylpolyalkylenglykolacrylaten oder Alkylpolyalkylenglykolmethacrylaten und Acrylsäure und/oder Methacrylsäure und
(b1) mindestens ein hydrolysiertes Copolymerisat aus Vinylmethylether und Maleinsäureanhydrid in Form der freien Carboxylgruppen und zumindest teilweise in Form der z.B. mit Natronlauge, Kalilauge oder Ammoniak gebildeten Salze.

Weitere Kombinationen von Stabilisatoren zur Herstellung der wässrigen Dispersionen von anionischen Polymerisaten sind beispielsweise Mischungen aus
(a2,a3)Polypropylenglykolen, Polyethylenglykolen und/oder Blockcopolymeren aus Ethylenoxid und Propylenoxid mit Molekulargewichten M_{N} von 300 bis 50 000 und/oder mit C₁- bis C₄-Alkylgruppen ein- oder beidseitig endgruppenverschlossenen Polypropylenglykolen, Polyethylenglykolen und/oder Blockcopolymeren aus Ethylenoxid und Propylenoxid eines Molekulargewichts M_{N} von 300 bis 50 000 und
(b2) Maltodextrin.

In einer weiteren bevorzugten Ausführungsform der Erfindung enthalten die wässrigen Dispersionen der anionischen Polymerisate vorzugsweise als Stabilisator eine Kombination aus
(a2) mindestens einem Blockcopolymer aus Ethylenoxid und Propylenoxid und
(b4) mindestens einem Copolymer aus Acrylamid und Dimethylaminoethylacrylatmethochlorid.

Das Copolymer (b4) kann gegebenenfalls noch bis zu 5 mol-% Acrylsäure in einpolymerisierter Form enthalten.

Eine Ausführungsform der Erfindung ist eine Papierstreichmasse, welche in wässriger Basis enthält:
(i) von 80 bis 95 Gew.Teile anorganische Pigmente, bezogen auf den Gesamtfeststoffgehalt, wobei mindestens ein Calciumcarbonatpigment in einer Menge von 50 bis 100 Gewichtsteilen, bezogen auf die Gesamtmenge an Pigmenten enthalten ist und
(ii) von 0,05 bis 5 Gew.Teile, bezogen auf die Gesamtmenge an Pigmenten, mindestens eines Copolymeren in Form einer wässrigen Dispersion von wasserlöslichen Copolymeren, erhältlich durch radikalische Polymerisation von mindestens einer ersten Monomerart und mindestens einer zweiten Monomerart in Gegenwart von mindestens einem ersten polymeren Stabilisator und mindestens einem zweiten polymeren Stabilisator,
   wobei die erste Monomerart ausgewählt ist aus der Gruppe bestehend aus Acrylsäure und Methacrylsäure und die zweite Monomerart ausgewählt ist aus der Gruppe bestehend aus Acrylsäureestern von einwertigen Alkoholen mit 1 bis 20 C-Atomen und Methacrylsäureestern von einwertigen Alkoholen mit 1 bis 20 C-Atomen, und wobei der erste polymere Stabilisator ausgewählt ist aus der Gruppe bestehend aus Polyethylenglykol und Polyethylenglykol/Polypropylenglykol Blockcopolymeren und der zweite polymere Stabilisator ausgewählt ist aus der Gruppe bestehend aus wenigstens teilweise hydrolysierten Copolymerisaten aus Vinylalkylethern und Maleinsäureanhydrid und Copolymeren aus Methacrylsäure und Acrylamidoalkylsulfonsäure.

### Bindemittel

Die Papierstreichmasse enthält üblicherweise mindestens ein Bindemittel. Die wichtigsten Aufgaben von Bindemitteln in Papierstreichmassen sind, die Pigmente an das Papier und die Pigmente untereinander zu verbinden und teilweise Hohlräume zwischen Pigmentpartikeln aufzufüllen. Die Menge der Bindemittel beträgt vorzugsweise 1 bis 50 Gew.-Teile, oder 1 bis 20 Gew.-Teile auf 100 Gew.-Teile Pigment, bzw. Füllstoff (fest, d. h. ohne Wasser oder sonstige bei 21 °C, 1 bar flüssige Lösemittel).

In Betracht kommen Bindemittel auf natürlicher Basis, insbesondere Bindemittel auf Stärkebasis sowie synthetische Bindemittel, insbesondere durch Emulsionspolymerisation herstellbare Emulsionspolymerisate. Unter Bindemitteln auf Stärkebasis soll in diesem Zusammenhang jegliche native, modifizierte oder abgebaute Stärke verstanden werden. Native Stärken können aus Amylose, Amylopektin oder deren Gemischen bestehen. Bei modifizierten Stärken kann es sich um oxydierte Stärke, Stärkeester oder Stärkeether handeln. Durch Hydrolyse kann das Molgewicht der Stärke verringert werden (abgebaute Stärke). Als Abbauprodukte kommen Oligosaccharide oder Dextrine in Betracht. Bevorzugte Stärken sind Getreide-, Mais- und Kartoffelstärke. Besonders bevorzugt sind Getreide- und Maisstärke, ganz besonders bevorzugt Getreidestärke.

Als synthetische Bindemittel geeignete und üblicherweise eingesetzte Emulsionspolymerisate bestehen vorzugsweise zu mindestens 40 Gew.-%, bevorzugt zu mindestens 60 Gew.-%, besonders bevorzugt zu mindestens 80 Gew.-% aus so genannten Hauptmonomeren. Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, α- und p-Methylstyrol, α-Butyl-styrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Butadien, Isopren und Chloropren genannt.

Bevorzugte Hauptmonomere sind C₁-C₁₀-Alkyl(meth)acrylate und Mischungen der Alkyl(meth)acrylate mit Vinylaromaten, insbesondere Styrol, oder Kohlenwasserstoffe mit 2 Doppelbindungen, insbesondere Butadien, oder Gemische von derartigen Kohlenwasserstoffen mit Vinylaromaten, insbesondere Styrol. Bei Gemischen von aliphatischen Kohlenwasserstoffen (insbesondere Butadien) mit Vinylaromaten (insbesondere Styrol) kann das Verhältnis z. B. zwischen 10:90 bis 90:10, insbesondere 20:80 bis 80:20 liegen. Besonders bevorzugte Hauptmonomere sind Butadien und die vorstehenden Mischungen von Butadien und Styrol.

Neben den Hauptmonomeren kann das als Bindemittel geeignete Emulsionspolymerisat weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Der Gehalt an ethylenisch ungesättigten Säuren im Emulsionspolymerisat ist im Allgemeinen kleiner 5 Gew.-%. Weitere Monomere sind z. B. auch Hydroxylgruppen enthaltende Monomere, insbesondere C₁-C₁₀-Hydroxyalkyl(meth)acrylate, oder Amide wie (Meth)acrylamid.

Bei Verwendung von synthetischen Bindemitteln können auch natürliche Bindemittel wie Stärke mit verwendet werden, sind jedoch nicht zwingend erforderlich.

Erfindungsgemäße Papierstreichmassen können zusätzlich weitere Zusatz- und Hilfsstoffe enthalten, z.B. Füllstoffe, Co-Bindemittel und weitere Verdicker zur weiteren Optimierung von Viskosität und Wasserretention, optische Aufheller, Dispergatoren, Tenside, Gleitmittel (z.B. Calciumstearat und Wachse), Neutralisationsmittel (z.B. NaOH oder Ammoniumhydroxid) zur pH-Werteinstellung, Entschäumer, Entlüftungsmittel, Konservierungsmittel (z.B. Biocide), Verlaufshilfsmittel, Farbstoffe etc. Als weitere Verdicker kommen neben synthetischen Polymerisaten (z.B. vernetztes Polyacrylat), insbesondere Cellulosen, vorzugsweise Carboxymethylcellulose in Betracht. Optische Aufheller sind z.B. Fluoreszens- oder Phosphoreszensfarbstoffe, insbesondere Stilbene.

Es handelt sich vorzugsweise um eine wässrige Papierstreichmasse; sie enthält Wasser insbesondere bereits durch die Zubereitungsform der Bestandteile (wässrige Polymerdispersionen, wässrige Pigment-Slurries); die gewünschte Viskosität kann durch Zugabe von weiterem Wasser eingestellt werden. Übliche Feststoffgehalte der Papierstreichmassen liegen im Bereich von 30 bis 70 Gew.-%. Der pH Wert der Papierstreichmasse wird vorzugsweise auf Werte von 6 bis 10, insbesondere 7 bis 9,5 eingestellt.

### Herstellung und Verwendung

Die Herstellung der Papierstreichmasse kann nach üblichen Methoden erfolgen. Die Bestandteile werden in üblicher Weise zusammengegeben und gemischt. Die Papierstreichmasse wird vorzugsweise auf unbeschichtete Rohpapiere oder unbeschichteten Karton aufgetragen. Die Menge beträgt im allgemeinen 1 bis 50 g, vorzugsweise 5 bis 30 g (fest, d. h. ohne Wasser oder sonstige bei 21 °C, 1 bar flüssige Lösemittel) pro Quadratmeter. Die Beschichtung kann durch übliche Auftragverfahren erfolgen, z.B. mittels Leimpresse, Filmpresse, Bladecoater, Luftbürste, Rakel, Vorhangstreichverfahren (curtain coating) oder Spray-Coater. Je nach Pigmentsystem können die wässrigen Dispersionen der wasserlöslichen Copolymere in Papierstreichmassen für den Grundstrich und/oder für den Deckstrich verwendet werden. In einer Ausführungsform der Erfindung wird eine Papierstreichmasse mit Carbonatpigmenten als einzigen Pigmenten in Kombination mit den wässrigen Dispersionen der wasserlöslichen Copolymere gegebenenfalls in Kombination mit weiteren Hilfs- und Zusatzstoffen als Grundstrich auf Papier oder Karton aufgetragen.

Gegenstand der Erfindung ist auch ein Verfahren zum Streichen von Papier oder Karton, wobei
- eine wässrige Dispersion mindestens eines wasserlöslichen Copolymeren zur Verfügung gestellt wird, wobei das Copolymer erhältlich ist durch radikalische Polymerisation von mindestens einer ersten Monomerart und mindestens einer zweiten Monomerart in Gegenwart mindestens eines polymeren Stabilisators, wobei die erste Monomerart radikalisch polymerisierbare, ethylenisch ungesättigte, anionische Monomere umfasst und die zweite Monomerart radikalisch polymerisierbare, ethylenisch ungesättigte, nichtionische Monomere umfasst; und
- mit der wässrigen Dispersion, mindestens einem Metallsalzpigment, mindestens einem Bindemittel, Wasser und optionalen weiteren Hilfsstoffen eine Streichfarbe hergestellt wird; und
- die Streichfarbe auf Papier oder Karton aufgebracht wird.

Vorzugsweise enthält die Streichfarbe mindestens ein Carbonatpigment, insbesondere enthält sie als Pigmente ausschließlich Carbonatpigmente, z.B. Calciumcarbonat. Vorzugsweise wird die Streichfarbe als Grundstrich, d.h. als erste oder einzige Beschichtung auf Papier oder Karton aufgebracht.

Die erfindungsgemäßen Papierstreichmassen haben eine geringe Wasserretention und eine verminderte Neigung zu Gelierungen. Die beschichteten Papiere und Kartone haben gute anwendungstechnische Eigenschaften, insbesondere einen hohen Glanz und eine gute Rupffestigkeit. Sie sind in den üblichen Druckverfahren, wie Hochdruck, Tiefdruck, Offsetdruck, Digitaldruck, Inkjet-Druck, Flexodruck, Zeitungsdruck, Buchdruck, Sublimationsdruck, Laserdruck, elektrophotographischer Druck oder einer Kombination dieser Druckverfahren gut bedruckbar.

### Beispiele

Es werden wässrige Polymerdispersionen hergestellt durch radikalische Polymerisation in Wasser. Die Reaktionen werden unter Inertbedingungen (30 min Stickstoffzufuhr vor der Reaktion, während Reaktion konstante Stickstoffzufuhr) durchgeführt. Sofern nicht anders angegeben, beträgt die Rührgeschwindigkeit 200 Upm. Die Viskosität der hergestellten Emulsionen wird mit einem Brookfield-Viskosimeter ermittelt. K-Werte werden nach Fikentscher ermittelt. Zur Bestimmung werden die Polymere auf 0,1 % in einer 5 % NaCl-Lösung gelöst. Die Lösungen sind, sofern nicht anders angegeben, wässrige Lösungen.

### Beispiel 1

Die Polymerisation erfolgt mit folgenden Stoffen:

| | |
|---|---|
| 481,4 g | vollentsalztes Wasser |
| 271,4 g | einer 35%igen wässrigen Lösung eines Copolymeren aus Maleinsäure und Vinylmethylether |
| 30 g | Polyethylenglycol (M = 1500 g/mol), |
| 180 g | Acrylsäure, |
| 20 g | Ethylacrylat |
| 17 g | Natriumhypophosphit |
| 0,2 g | 2,2'-Azobis(2-amidinopropan)dihydrochlorid |
| 0,2 g | 2,2'-Azobis-[N,N'-dimethylenisobutyramidin]-dihydrochlorid |

In einem 2L-Gefäß mit Rührer und Rückflusskühler werden Wasser, die Lösung des Copolymeren aus Maleinsäure und Vinylmethylether, Polyethylenglycol, die Monomeren und Natriumhypophosphit eingewogen und auf 40 °C erhitzt. Dann wird 2,2'-Azobis(2-amidinopropan)dihydrochlorid hinzugegeben. Nach sechs Stunden wird 2,2'-Azobis-[N,N'-dimethylenisobutyramidin]-dihydrochlorid hinzugegeben und die Temperatur auf 50 °C erhöht. Nach zwei weiteren Stunden ist die Reaktion beendet.

Man erhält eine weiße Emulsion. Der K-Wert beträgt 48,0.

### Beispiel 2

Die Polymerisation erfolgt mit folgenden Stoffen:

| | |
|---|---|
| 498,4 g | vollentsalztes Wasser |
| 271,4 g | einer 35 % wässrigen Lösung eines Copolymeren aus Maleinsäure und Vinylmethylether |
| 30 g | Polyethylenglykol (M = 1500 g/mol) |
| 180 g | Acrylsäure |
| 20 g | Ethylacrylat |

2,2'-Azobis-[N,N'-dimethylenisobutyramidin]-dihydrochlorid

In einem 2L-Gefäß mit Rührer und Rückflusskühler werden Wasser, die Lösung des Copolymeren aus Maleinsäure und Vinylmethylether und Polyethylenglykol auf 40 °C erhitzt. Dann werden 0,2 g 2,2'-Azobis-[N,N'-dimethylenisobutyramidin]-dihydrochlorid hinzugegeben. Innerhalb von 10 min wird das Monomerengemisch hinzugetropft. Nach sechs Stunden werden 0,2 g 2,2'-azobis-[N,N'-dimethylenisobutyramidin]-dihydrochlorid hinzugegeben und die Temperatur auf 50 °C erhöht. Nach zwei weiteren Stunden ist die Reaktion beendet.

Man erhält eine weiße Emulsion.
Viskosität: 22000 mPa s (Spindel 4, 10 Upm)
K-Wert: 177,3

### Beispiel 3

Die Polymerisation erfolgt mit folgenden Stoffen:

| | |
|---|---|
| 498,4 g | vollentsalztes Wasser |
| 271,4 g | einer 35 % wässrigen Lösung eines Copolymeren aus Maleinsäure und Vinylmethylether |
| 30 g | Polyethylenglykol (M = 1500 g/mol) |
| 90 g | Acrylsäure |
| 90 g | Methacrylsäure |
| 20 g | Ethylacrylat |

2,2'-Azobis(2-amidinopropan)dihydrochlorid

In einem 2L-Gefäß mit Rührer und Rückflusskühler werden Wasser, die Lösung des Copolymeren aus Maleinsäure und Vinylmethylether und Polyethylenglykol auf 60 °C erhitzt. Dann werden 0,2 g 2,2'-Azobis(2-amidinopropan)dihydrochlorid hinzugegeben. Innerhalb von 10 min wird das Monomerengemisch hinzugetropft. Nach sechs Stunden werden 0,2 g 2,2'-Azobis(2-amidinopropan)dihydrochlorid hinzugegeben. Nach zwei weiteren Stunden ist die Reaktion beendet.

Man erhält eine weiße Emulsion.
Teilchengröße: zwischen 10 und 20 µm.
Viskosität: 10600 mPa s (Spindel 4, 5 Upm)
K-Wert: 148,5

### Beispiel 4

Die Polymerisation erfolgt mit folgenden Stoffen:

| | |
|---|---|
| 473,8 g | vollentsalztes Wasser |
| 146 g | einer 10,5 % wässrigen Lösung eines Copolymeren aus Methacrylsäure und Acrylamido-2-methylpropylsulfonsäure |
| 180 g | (EO/PO/EO)-Triblockcopolymer (Pluronic® PE4300) |
| 180 g | Acrylsäure |
| 20 g | Ethylacrylat |

2,2'-Azobis-[N,N'-dimethylenisobutyramidin]-dihydrochlorid

In einem 2L-Gefäß mit Rührer und Rückflusskühler werden Wasser, die Lösung des Copolymeren aus Methacrylsäure und Acrylamido-2-methylpropylsulfonsäure und Triblockcopolymer auf 40 °C erhitzt. Dann werden 0,2 g 2,2'-Azobis-[N,N'-dimethylenisobutyramidin]-dihydrochlorid hinzugegeben. Innerhalb von 10 min wird das Monomerengemisch hinzugetropft. Nach sechs Stunden werden 0,1 g 2,2'-azobis-[N,N'-dimethylenisobutyramidin]-dihydrochlorid hinzugegeben. Nach zwei weiteren Stunden ist die Reaktion beendet.

Man erhält eine weiße Emulsion.
Teilchengröße: zwischen 10 und 20 µm.
Viskosität: 10600 mPa s (Spindel 4, 5 Upm)
K-Wert: 148,5

### Beispiel 5

Die Polymerisation erfolgt mit folgenden Stoffen:

| | |
|---|---|
| 400 g | vollentsalztes Wasser |
| 25 g | Lupasol® S, 20%ige wässrige Lösung (Poly(Acrylsäure-co- Acrylamido-2-methylpropylsulfonsäure -co-Methylacrylat-co-Styrol) |
| 200 g | Lupasol® S, 5%ige wässrige Lösung Poly(Acrylsäure-co- Acrylamido-2-methylpropylsulfonsäure -co-Methylacrylat-co-Styrol) |
| 125 g | (EO/PO/EO)-Triblockcopolymer (Pluronic® PE3500) |
| 180 g | Acrylsäure |
| 20 g | Ethylacrylat |
| 50 g | 1%ige wässige Natriumperoxodisulfatlösung |

In einem 2L-Gefäß mit Rührer und Rückflusskühler werden Wasser, 20%iges Lupasol® S und das Triblockcopolymer auf 60 °C erhitzt. Dann werden parallel innerhalb von 6 Stunden Natriumperoxodisulfatlösung, das Monomerengemisch und 5%iges Lupasol® S hinzugetropft. Nach weiteren 105 min ist die Reaktion beendet.

Man erhält eine weiße Emulsion.
Viskosität: 1700 mPa s (Spindel 4, 20 Upm)
K-Wert: 76,7

### Beispiel 6

Die Polymerisation erfolgt mit folgenden Stoffen:

| | |
|---|---|
| 575 g | vollentsalztes Wasser |
| 50 g | Lupasol® S, 20%ige wässrige Lösung (Poly(Acrylsäure-co- Acrylamido-2-methylpropylsulfonsäure -co-Methylacrylat-co-Styrol) |
| 125 g | (EO/PO/EO)-Triblockcopolymer (Pluronic® PE3500) |
| 180 g | Acrylsäure |
| 20 g | Ethylacrylat |
| 50 g | 1%ige wässrige Natriumperoxodisulfatlösung |

In einem 2L-Gefäß mit Rührer und Rückflusskühler werden 275 g Wasser, Lupasol® S und das Triblockcopolymer auf 60 °C erhitzt. Dann werden parallel innerhalb von 6 Stunden Natriumperoxodisulfatlösung, das Monomerengemisch und 300 g Wasser hinzugetropft. Nach weiteren 105 min ist die Reaktion beendet.

Man erhält eine weiße Emulsion.
Viskosität: 1300 mPa s (Spindel 4, 20 Upm)
K-Wert: 82,7

### Beispiel 7

Die Polymerisation erfolgt mit folgenden Stoffen:

| | |
|---|---|
| 575 g | vollentsalztes Wasser |
| 50 g | Lupasol® S, 20%ige wässrige Lösung (Poly(Acrylsäure-co- Acrylamido-2-methylpropylsulfonsäure -co-Methylacrylat-co-Styrol) |
| 125 g | (EO/PO/EO)-Triblockcopolymer (Pluronic® PE3500) |
| 180 g | Acrylsäure |
| 20 g | Ethylacrylat |
| 50 g | 2%ige wässrige Lösung 2,2'-Azobis(2-amidinopropan)dihydrochlorid |

In einem 2L-Gefäß mit Rührer und Rückflusskühler werden Wasser, Lupasol® S und das Triblockcopolymer auf 60 °C erhitzt. Dann werden parallel innerhalb von 6 Stunden Starterlösung und das Monomerengemisch hinzugetropft. Nach weiteren 105 min ist die Reaktion beendet.

Man erhält eine weiße Emulsion.
Viskosität: 1140 mPa s (Spindel 4, 20 Upm)
K-Wert: 65,8

### Beispiel 8

Die Polymerisation erfolgt mit folgenden Stoffen:

| | |
|---|---|
| 572,7 g | vollentsalztes Wasser |
| 50 g | Lupasol® S, 20%ige wässrige Lösung (Poly(Acrylsäure-co- Acrylamido-2-methylpropylsulfonsäure -co-Methylacrylat-co-Styrol) |
| 125 g | (EO/PO/EO)-Triblockcopolymer (Pluronic® PE3500) |
| 180 g | Acrylsäure |
| 20 g | Ethylacrylat |
| 50 g | 0,5%ige wässrige Natriumperoxodisulfatlösung |
| 3,3 g | PLEX 6954-O (60%ige wässrige Lösung eines ethoxylierten (25 EO) C16-C18-Fettalkoholmethacrylsäureesters) |

In einem 2L-Gefäß mit Rührer und Rückflusskühler werden 275 g Wasser, Lupasol® S und das Triblockcopolymer auf 60 °C erhitzt. Dann werden parallel innerhalb von 6 Stunden Natriumperoxodisulfatlösung, das Monomerengemisch, PLEX 6954-O und 296,7 g Wasser hinzugetropft. Nach weiteren 105 min ist die Reaktion beendet.

Man erhält eine weiße Emulsion.
Viskosität: 1350 mPa s (Spindel 4, 20 Upm)
K-Wert: 116,4

### Beispiel 9

Die Polymerisation erfolgt mit folgenden Stoffen:

| | |
|---|---|
| 625 g | vollentsalztes Wasser |
| 50 g | Lupasol® S, 20%ige wässrige Lösung (Poly(Acrylsäure-co- Acrylamido-2-methylpropylsulfonsäure -co-Methylacrylat-co-Styrol) |
| 125 g | (EO/PO/EO)-Triblockcopolymer (Pluronic® PE3500) |
| 180 g | Acrylsäure |
| 20 g | Ethylacrylat |
| 0,2 g | Natriumperoxodisulfat |

In einem 2L-Gefäß mit Rührer und Rückflusskühler werden Wasser, Lupasol® S und das Triblockcopolymer auf 40 °C erhitzt. Dann wird der Starter zugegeben. Dann wird innerhalb von 10 Minuten das Monomerengemisch hinzugetropft. Nach zwei weiteren Stunden ist die Reaktion beendet.

Man erhält eine weiße Emulsion.
Teilchengröße zwischen 5 und 10 µm
Viskosität: 7950 mPa s (Spindel 4, 10 Upm)
K-Wert: 155,8

### Vergleichsbeispiel V1

Die Polymerisation erfolgt mit folgenden Stoffen:

| | |
|---|---|
| 498,4 g | vollentsalztes Wasser |
| 271,4 g | einer 35 % wässrigen Lösung eines Copolymeren aus Maleinsäure und Vinylmethylether |
| 30 g | Polyethylenglykol (M = 1500 g/mol) |
| 200 g | Acrylsäure |

2,2'-Azobis-[N,N'-dimethylenisobutyramidin]-dihydrochlorid

In einem 2L-Gefäß mit Rührer und Rückflusskühler werden Wasser, die Lösung des Copolymeren aus Maleinsäure und Vinylmethylether, Monomer und Polyethylenglykol auf 40 °C erhitzt. Dann werden 0,2 g 2,2'-Azobis-[N,N'-dimethylenisobutyramidin]-dihydrochlorid hinzugegeben. Nach sechs Stunden werden weitere 0,2 g 2,2'-azobis-[N,N'-dimethylenisobutyramidin]-dihydrochlorid hinzugegeben und die Temperatur auf 50 °C erhöht. Nach zwei weiteren Stunden ist die Reaktion beendet.

Man erhält eine weiße Emulsion.
Partikelgröße zwischen 3 und 8 µm
Viskosität: 10800 mPa s (Spindel 4, 10 Upm)
K-Wert: 155,6

### Vergleichsbeispiel V2

Die Polymerisation erfolgt wie bei Vergleichsbeispiel V1 mit folgenden Stoffen:

| | |
|---|---|
| 498,4 g | vollentsalztes Wasser |
| 271,4 g | einer 35 % wässrigen Lösung eines Copolymeren aus Maleinsäure und Vinylmethylether |
| 30 g | Polyethylenglykol (M = 1500 g/mol) |
| 200 g | Acrylsäure |
| 0,25 g | Pentaerithyttriallylether |

2,2'-Azobis-[N,N'-dimethylenisobutyramidin)-dihydrochlorid

Man erhält eine weiße Emulsion.
Partikelgröße zwischen 3 und 8 µm
Viskosität: 17800 mPa s (Spindel 4, 10 Upm)
K-Wert nicht bestimmbar (vernetztes Polymer, ungelöste Anteile)

### Gelierungsverhalten

Das Gelierungsverhalten wurde visuell beurteilt, indem eine abgedeckte Probe über Nacht bei 20-23°C stehen gelassen wurde. Eine nicht gelierte Probe ist noch fließfähig. Eine gelierte Probe ist nicht mehr fließfähig, wenn das Probengefäß gekippt wird. Ferner lässt sich eine gelierte Probe mit einem Glasstab anritzen, ohne dass sich der Riss wieder schließt. Die gelierte Probe verhält sich wie ein Pudding.

### Wasserretention

Das Wasserrückhaltevermögen (Wasserretention, WR) wurde nach der GRADEK Methode gemessen. Die Methode charakterisiert eine Streichfarbe hinsichtlich ihres Wasserrückhaltevermögens in einer standardisierten Laborprüfung. Ein gutes Wasserrückhaltevermögen ist für die Verarbeitung einer Papierstreichmasse auf großen und schnell laufenden Papierbeschichtungsanlagen sehr wichtig. Die zu prüfende Streichfarbe wird unter definierten Bedingungen (Druck von 1 bar, Messzeit 1 Minute) über eine Polycarbonatmembran in eine Filterpapierschicht entwässert. Die von der Filterpapierschicht aufgenommene Wassermenge wird gravimetrisch bestimmt. Je mehr Wasser aufgenommen wurde, desto schlechter ist die Wasserretention der Papierstreichmasse. Die Angabe der aufgenommenen Wassermenge erfolgt in g/m². Da es bei Verwendung unterschiedlicher Chargen der Membranfilter zu Abweichungen in den Messergebnissen kommen kann, wird ein Vergleich verschiedener Streichfarben jeweils mit Membranfiltern der gleichen Charge durchgeführt.

Verwendete Geräte und Materialien:
Druckfiltrationsgerät Abo Akademi Gravimetric Water Retention,
Waage, mit der auf 0,1 mg gewogen werden kann,
Polycarbonat-Membranfilter, Fa. Piper, Porengröße 5 µm, Durchmesser 47 mm,
Schwarzbandfilterpapier Schleicher & Schüll Durchmesser 9 cm,
Stoppuhr

### Papierstreichmassen

Viskositäten der Papierstreichmassen werden gemessen mit einem Brookfield-Viskosimeter bei 100 Umdrehungen pro Minute und Spindel Nr. 2, 15 Minuten nach dem Ansetzen der Streichmasse.

### Beispiel 10

Papierstreichmassen werden durch Verrühren folgender wässriger Bestandteile hergestellt:

| | |
|---|---|
| 50 Teile fest | Capim NP 50 (Tonerde-Pigment) |
| 50 Teile fest | Covercarb 60 ME slurry (Calciumcarbonat-Pigment) |
| 10 Teile fest | Styronal® D628 (handelsübliches Bindemittel für Papierstreichmassen, Emulsionspolymerisat auf Basis von Butadien, Styrol und Acrylnitril) |
| 0,1-0,6 Teile fest | Verdicker gemäß einem der Beispiele 1 bis 9 oder der Vergleichsbeispiele V1 bis V4. |

Die Dosierung der Verdicker wird so gewählt, dass die Brookfield-Viskosität der Streichmasse etwa 800-900 mPa s beträgt. Der pH -Wert der Streichmasse wird mit NaOH Lösung auf 9.1-9.2 justiert und der Feststoffgehalt auf 67% mit voll entsalztem Wasser eingestellt.

| Beispiel | Verdicker | Verdickermenge (Gew.Teile fest) | Viskosität (mPa s) | Wasserretention (g/m²) | Gelierung |
|---|---|---|---|---|---|
| 10-2 | Copolymer aus Bsp 2; K 177 | 0,12 | 890 | 52 | wenig |
| 10-V1 | Homopolymer aus Bsp V1; K 156 | 0,12 | 920 | 54 | stark |
| 10-V2 | vernetztes Polymer aus Bsp V2 | 0,12 | 790 | 57 | stark |

### Beispiel 11

Papierstreichmassen für den Grundstrich werden durch Verrühren folgender wässriger Bestandteile hergestellt:

| | |
|---|---|
| 100 Teile fest | Hydrocarb ME 60 (natural ground Calciumcarbonat-Pigment, GCC) |
| 10 Teile fest | Styronal® D628 (handelsübliches Bindemittel für Papierstreichmassen, Emulsionspolymerisat auf Basis von Butadien, Styrol und Acrylnitril) |
| 0,1-1,6 Teile fest | Verdicker gemäß einem der Beispiele 1 bis 9 oder der Vergleichsbeispiele V1 bis V4. |

Die Dosierung der Verdicker wird so gewählt, dass die Brookfield-Viskosität der Streichmasse etwa 1200 mPa s beträgt. Der pH -Wert der Streichmasse wird mit Na-OH Lösung auf 9.1-9.2 justiert und der Feststoffgehalt auf 65% mit voll entsalztem Wasser eingestellt.

| Beispiel | Verdicker | Menge Verdicker (Gew.Teile fest) | Viskosität (mPa s) | Wasserretention (g/m²) |
|---|---|---|---|---|
| 11-1 | Copolymer aus Bsp 5 | 1,24 | 1130 | 52 |
| 11-2 | Copolymer aus Bsp 6 | 1,3 | 1120 | 54 |
| 11-3 | Copolymer aus Bsp 7 | 1,1 | 1130 | 57 |
| 11-V1 | Sterocoll ® FS ¹⁾ | 0,33 | 1150 | 70 |

| | | | | |
|---|---|---|---|---|
| ¹⁾ handelsüblicher Verdicker, wässrige Dispersion eines Acrylat/(Meth)acrylsäure-Copolymers, BASF | | | | |

### Beispiel 12

Papierstreichmassen für den Grundstrich werden durch Verrühren folgender wässriger Bestandteile hergestellt:

| | |
|---|---|
| 100 Teile fest | Hydrocarb ME 60 (natural ground Calciumcarbonat-Pigment, GCC) |
| 10 Teile fest | Styronal® D628 (handelsübliches Bindemittel für Papierstreichmassen, Emulsionspolymerisat auf Basis von Butadien, Styrol und Acrylnitril) |
| 0,1-1,6 Teile fest | Verdicker gemäß einem der Beispiele 1 bis 9 oder der Vergleichsbeispiele V1 bis V4. |

Die Dosierung der Verdicker wird so gewählt, dass die Brookfield-Viskosität der Streichmasse etwa 1200 mPa s beträgt. Der pH -Wert der Streichmasse wird mit Na-OH Lösung auf 9.1-9.2 justiert und der Feststoffgehalt auf 65% mit voll entsalztem Wasser eingestellt.

| Beispiel | Verdicker | Menge Verdicker (Gew.Teile fest) | Viskosität (mPa s) | Wasserretention (g/m²) |
|---|---|---|---|---|
| 12-1 | Copolymer aus Bsp 8 | 0,53 | 1180 | 62 |
| 12-2 | Copolymer aus Bsp 8 | 0,41 | 1380 | 55 |
| 12-3 | Copolymer aus Bsp 9 | 0,9 | 1210 | 53 |
| 12-V1 | Sterocoll ® FS ¹⁾ | 0,38 | 1120 | 80 |

| | | | | |
|---|---|---|---|---|
| ¹⁾ handelsüblicher Verdicker, wässrige Dispersion eines Acrylat/(Meth)acrylsäure-Copolymers, BASF | | | | |

### Beispiel 13

Papierstreichmassen für den Deckstrich werden durch Verrühren folgender wässriger Bestandteile hergestellt:

| | |
|---|---|
| 60 Teile fest | Hydrocarb 90 ME slurry (Calciumcarbonat-Pigment, GCC) |
| 40 Teile fest | Hydragloss 90 slurry (Tonerde-Pigment) |
| 10 Teile fest | Styronal® D628 (handelsübliches Bindemittel für Papierstreichmassen, Emulsionspolymerisat auf Basis von Butadien, Styrol und Acrylnitril) |
| 0,1-0,6 Teile fest | Verdicker gemäß einem der Beispiele 1 bis 9. |

Die Dosierung der Verdicker wird so gewählt, dass die Brookfield-Viskosität der Streichmasse etwa 1200 mPa s beträgt. Der pH -Wert der Streichmasse wird mit Na-OH Lösung auf 9.1-9.2 justiert und der Feststoffgehalt auf 67% mit voll entsalztem Wasser eingestellt.

### Vergleichsbeispiel 14

Papierstreichmassen für den Tiefdruck werden durch Verrühren folgender wässriger Bestandteile hergestellt:

| | |
|---|---|
| 50 Teile fest | Talcum C10 - Slurry (Talkumpigment) |
| 50 Teile fest | Century Clay - Slurry (Tonerde-Pigment) |
| 10 Teile fest | Styronal® D628 (handelsübliches Bindemittel für Papierstreichmassen, Emulsionspolymerisat auf Basis von Butadien, Styrol und Acrylnitril) |
| 0,1-0,6 Teile fest | Verdicker gemäß einem der Beispiele 1 bis 9. |

Die Dosierung der Verdicker wird so gewählt, dass die Brookfield-Viskosität der Streichmasse etwa 1000 mPa s beträgt. Der pH -Wert der Streichmasse wird mit Na-OH Lösung auf 9.1-9.2 justiert und der Feststoffgehalt auf 52% mit voll entsalztem Wasser eingestellt.

## Patentansprüche

1. Papierstreichmasse enthaltend
(i) anorganische Pigmente, wobei mindestens ein Metallsalzpigment in einer Menge von mindestens 40 Gewichtsteilen, bezogen auf die Gesamtmenge an Pigmenten enthalten ist und
(ii) eine wässrige Dispersion von wasserlöslichen Copolymeren, erhältlich durch radikalische Polymerisation von mindestens einer ersten Monomerart und mindestens einer zweiten Monomerart in Gegenwart mindestens eines polymeren Stabilisators für Wasser-in-Wasser Polymerdispersionen,
wobei die erste Monomerart radikalisch polymerisierbare, ethylenisch ungesättigte, anionische Monomere umfasst und die zweite Monomerart radikalisch polymerisierbare, ethylenisch ungesättigte, nichtionische Monomere umfasst.

2. Papierstreichmasse nach Anspruch 1, **dadurch gekennzeichnet, dass** der polymere Stabilisator ausgewählt ist aus wasserlöslichen Polymeren der nachfolgenden Gruppen (a) und (b),
wobei Gruppe a) besteht aus
a1) Pfropfpolymerisate von Vinylacetat und/oder Vinylpropionat auf (i) Polyethylenglykolen oder (ii) ein- oder beidseitig mit Alkyl-, Carboxyl- oder Aminogruppen endgruppenverschlossenen Polyethylenglykolen oder Polypropylenglykolen;
a2) Polyalkylenglykole;
a3) ein- oder beidseitig mit Alkyl-, Carboxyl- oder Aminogruppen endgruppenverschlossene Polyalkylenglykole;
a4) Copolymerisate aus Alkylpolyalkylenglykolacrylaten oder Alkylpolyalkylenglykolmethacrylaten und Acrylsäure und/oder Methacrylsäure;
und wobei Gruppe b) besteht aus
b1) wenigstens teilweise hydrolysierten Copolymerisaten aus Vinylalkylethern und Maleinsäureanhydrid, die wenigstens teilweise in der z.B. mit Alkalimetallhydroxiden oder Ammoniumbasen neutralisierten Salzform vorliegen können;
b2) wasserlöslicher Stärke;
b3) anionischen Homo- und Copolymerisaten, ausgewählt aus der Gruppe der
- Homo- und Copolymerisate aus ausschließlich anionischen Monomeren;
- Copolymerisate aus anionischen und kationischen und gegebenenfalls neutralen Monomeren, wobei der Anteil der einpolymerisierten anionischen Monomeren größer ist als der der kationischen Monomeren und
- Copolymerisate aus mindestens einem anionischen Monomer und mindestens einem Monomer aus der Gruppe der Ester von anionischen Monomeren mit einwertigen Alkoholen, Styrol, N-Vinylpyrrolidon, N-Vinylcaprolactam, N-Vinylimidazol, N-Vinylformamid, Acrylamid, Methacrylamid, Vinylacetat und Vinylpropionat;
- wasserlösliche oder wasserdispergierbare Copolymere aus (1) anionischen monoethylenisch ungesättigten Monomeren und (2) nichtionischen monoethylenisch ungesättigten Monomeren, wobei der Anteil der einpolymerisierten anionischen Monomeren mindestens genauso groß ist wie derjenige der nichtionischen Monomeren;
b4) kationischen Copolymeren aus nichtionischen monoethylenisch ungesättigten Monomeren und kationischen monoethylenisch ungesättigten Monomeren und gegebenenfalls anionischen monoethylenisch ungesättigten Monomeren, wobei die Anzahl der kationischen Gruppen größer ist als die Anzahl der anionischen Gruppen.

3. Papierstreichmasse nach Anspruch 1 oder 2, **dadurch gekennzeichnet, dass** die Polymerisation in Gegenwart mindestens eines ersten polymeren Stabilisators und mindestens eines davon verschiedenen zweiten polymeren Stabilisators erfolgt, wobei der erste Stabilisator ausgewählt ist aus der Gruppe (a) gemäß Anspruch 2 und der zweite Stabilisator ausgewählt ist aus der Gruppe (b) gemäß Anspruch 2.

4. Papierstreichmasse nach einem der vorhergehenden Ansprüche, **dadurch gekennzeichnet, dass** die Metallsalzpigmente ausgewählt sind aus der Gruppe bestehend aus Calciumsulfat, Calciumaluminatsulfat, Bariumsulfat, Magnesiumcarbonat und Calciumcarbonat.

5. Papierstreichmasse nach einem der vorhergehenden Ansprüche, **dadurch gekennzeichnet, dass** die Menge an Metallsalzpigmenten von 50 bis 100 Gew.%, bezogen auf die Gesamtpigmentmenge beträgt.

6. Papierstreichmasse nach einem der vorhergehenden Ansprüche, **dadurch gekennzeichnet, dass** neben dem Metallsalzpigment mindestens ein weiteres anorganisches Pigment enthalten ist, ausgewählt aus der Gruppe bestehend aus Kieselsäuren, Aluminiumoxide, Aluminiumhydrat, Silikaten, Titandioxid, Zinkoxid, Kaolin, Tonerde, Talkum und Siliziumdioxid.

7. Papierstreichmasse nach einem der vorhergehenden Ansprüche, **dadurch gekennzeichnet, dass** die erste Monomerart des Copolymeren ausgewählt ist aus der Gruppe bestehend aus monoethylenisch ungesättigten C₃- bis C₅-Carbonsäuren, Vinylsulfonsäure, Styrolsulfonsäure, Acrylamidomethylpropansulfonsäure, Vinylphosphonsäure und den Alkalimetall- oder Ammoniumsalzen dieser Säuren.

8. Papierstreichmasse nach einem der vorhergehenden Ansprüche, **dadurch gekennzeichnet, dass** die zweite Monomerart des Copolymeren ausgewählt ist der Gruppe bestehend aus Acrylamid, Methacrylamid, Acrylsäureester von einwertigen Alkoholen mit 1 bis 20 C-Atomen, Methacrylsäureester von einwertigen Alkoholen mit 1 bis 20 C-Atomen, Vinylacetat und Vinylpropionat.

9. Papierstreichmasse nach einem der vorhergehenden Ansprüche, **dadurch gekennzeichnet, dass** das Gewichtsmengenverhältnis von erster Monomerart zu zweiter Monomerart des Copolymeren von 95:5 bis 60:40 beträgt.

10. Papierstreichmasse nach einem der vorhergehenden Ansprüche, **dadurch gekennzeichnet, dass** die Menge an Copolymer in der Papierstreichmasse von 0,05 bis 5 Gew.-Teile auf 100 Gew.-Teile Pigment beträgt.

11. Papierstreichmasse nach einem der vorhergehenden Ansprüche, **dadurch gekennzeichnet, dass** das Copolymer ein Copolymer der Acrylsäure mit mindestens einem Comonomer, ausgewählt aus der Gruppe bestehend aus Acrylsäureestern von einwertigen Alkoholen mit 1 bis 20 C-Atomen und Methacrylsäureestern von einwertigen Alkoholen mit 1 bis 20 C-Atomen ist.

12. Papierstreichmasse nach einem der vorhergehenden Ansprüche, **dadurch gekennzeichnet, dass** das Copolymer einen K-Wert von mindestens 60 aufweist.

13. Papierstreichmasse nach einem der vorhergehenden Ansprüche, **dadurch gekennzeichnet, dass** sie zusätzlich mindestens einen Hilfsstoff enthält, ausgewählt aus der Gruppe bestehend aus polymeren Bindemitteln, Co-Bindemitteln, optischen Aufhellern, Füllstoffen, Verlaufshilfsmitteln, Dispergatoren, Tensiden, Gleitmitteln, Neuträlisationsmitteln, Entschäumern, Entlüftungsmitteln, Konservierungsmitteln und Farbstoffen.

14. Papierstreichmasse nach dem vorhergehenden Anspruch, **dadurch gekennzeichnet, dass** das polymere Bindemittel in einer Menge von 1 bis 50 Gew.-Teilen, bezogen auf die Gesamtmenge an Pigmenten, eingesetzt wird und das polymere Bindemittel ausgewählt ist aus der Gruppe bestehend aus Bindemitteln auf Stärkebasis und Emulsionspolymerisaten bestehend zu mindestens 40 Gew.-% aus Hauptmonomeren, ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

15. Papierstreichmasse nach einem der vorhergehenden Ansprüche, **dadurch gekennzeichnet, dass** sie in wässriger Basis enthält
(i) von 80 bis 95 Gew.Teile anorganische Pigmente, bezogen auf den Gesamtfeststoffgehalt, wobei mindestens ein Calciumcarbonatpigment in einer Menge von 50 bis 100 Gewichtsteilen, bezogen auf die Gesamtmenge an Pigmenten enthalten ist und
(ii) von 0,05 bis 5 Gew.Teile, bezogen auf die Gesamtmenge an Pigmenten, mindestens eines Copolymeren in Form einer wässrigen Dispersion von wasserlöslichen Copolymeren, erhältlich durch radikalische Polymerisation von mindestens einer ersten Monomerart und mindestens einer zweiten Monomerart in Gegenwart von mindestens einem ersten polymeren Stabilisator und mindestens einem zweiten polymeren Stabilisator,
wobei die erste Monomerart ausgewählt ist aus der Gruppe bestehend aus Acrylsäure und Methacrylsäure und die zweite Monomerart ausgewählt ist aus der Gruppe bestehend aus Acrylsäureestern von einwertigen Alkoholen mit 1 bis 20 C-Atomen und Methacrylsäureestern von einwertigen Alkoholen mit 1 bis 20 C-Atomen, und
wobei der erste polymere Stabilisator ausgewählt ist aus der Gruppe bestehend aus Polyethylenglykol und Polyethylenglykol/Polypropylenglykol Blockcopolymeren und der zweite polymere Stabilisator ausgewählt ist aus der Gruppe bestehend aus wenigstens teilweise hydrolysierten Copolymerisaten aus Vinylalkylethern und Maleinsäureanhydrid und Copolymeren aus Methacrylsäure und Acrylamidoalkylsulfonsäure.

16. Papierstreichmasse nach einem der vorhergehenden Ansprüche, **dadurch gekennzeichnet, dass** das in der wässrigen Dispersion enthaltene wasserlöslicher Copolymer nicht vernetzt ist.

17. Verwendung einer wässrigen Dispersion von wasserlöslichen Copolymeren in Metallsalzpigment enthaltenden Papierstreichmassen, wobei die Copolymeren erhältlich sind durch radikalische Polymerisation von mindestens einer ersten Monomerart und mindestens einer zweiten Monomerart in Gegenwart mindestens eines polymeren Stabilisators, wobei die erste Monomerart radikalisch polymerisierbare, ethylenisch ungesättigte, anionische Monomere umfasst und die zweite Monomerart radikalisch polymerisierbare, ethylenisch ungesättigte, nichtionische Monomere umfasst.

18. Verwendung der Papierstreichmasse gemäß einem der Ansprüche 1 bis 16 zum Beschichten von Papier oder Karton.

19. Mit einer Papierstreichmasse gemäß einem der Ansprüche 1 bis 16 beschichtetes Papier oder Karton.

20. Verfahren zum Streichen von Papier oder Karton, wobei
- eine wässrige Dispersion mindestens eines wasserlöslichen Copolymeren zur Verfügung gestellt wird, wobei das Copolymer erhältlich ist durch radikalische Polymerisation von mindestens einer ersten Monomerart und mindestens einer zweiten Monomerart in Gegenwart mindestens eines polymeren Stabilisators, wobei die erste Monomerart radikalisch polymerisierbare, ethylenisch ungesättigte, anionische Monomere umfasst und die zweite Monomerart radikalisch polymerisierbare, ethylenisch ungesättigte, nichtionische Monomere umfasst; und
- mit der wässrigen Dispersion, mindestens einem Metallsalzpigment, mindestens einem Bindemittel, Wasser und optionalen weiteren Hilfsstoffen eine Streichfarbe hergestellt wird; und die Streichfarbe auf Papier oder Karton aufgebracht wird.

## Claims

1. A paper coating slip comprising
(i) inorganic pigments, at least one metal salt pigment being present in an amount of at least 40 parts by weight, based on the total amount of pigments and
(ii) an aqueous dispersion of water-soluble copolymers obtainable by free-radical polymerization of at least one first monomer type and at least one second monomer type in the presence of at least one polymeric stabilizer for water-in-water polymer dispersions,
the first monomer type comprising ethylenically unsaturated, anionic monomers capable of free-radical polymerization and the second monomer type comprising ethylenically unsaturated, nonionic monomers capable of free-radical polymerization.

2. The paper coating slip according to claim 1, wherein the polymeric stabilizer is selected from water-soluble polymers of the following groups (a) and (b),
group a) consisting of
a1) graft polymers of vinyl acetate and/or vinyl propionate on (i) polyethylene glycols or (ii) polyethylene glycols or polypropylene glycols endcapped at one or both ends with alkyl, carboxyl or amino groups;
a2) polyalkylene glycols;
a3) polyalkylene glycols endcapped at one or both ends with alkyl, carboxyl or amino groups;
a4) copolymers of alkylpolyalkylene glycol acrylates or alkylpolyalkylene glycol methacrylates and acrylic acid and/or methacrylic acid;
and group b) consisting of
b1) at least partly hydrolyzed copolymers of vinyl alkyl ethers and maleic anhydride, which can be present at least partly in the salt form neutralized, for example, with alkali metal hydroxides or ammonium bases;
b2) water-soluble starch;
b3) anionic homo- and copolymers selected from the group consisting of the
- homo- and copolymers of exclusively anionic monomers;
- copolymers of anionic and cationic and, optionally neutral monomers, the proportion of the anionic monomers incorporated in the form of polymerized units being greater than that of the cationic monomers and
- copolymers of at least one anionic monomer and at least one monomer from the group consisting of the esters of anionic monomers with monohydric alcohols, styrene, N-vinylpyrrolidone, N-vinylcaprolactam, N-vinylimidazole, N-vinylformamide, acrylamide, methacrylamide, vinyl acetate and vinyl propionate;
- water-soluble or water-dispersible copolymers of (1) anionic monoethylenically unsaturated monomers and (2) nonionic monoethylenically unsaturated monomers, the proportion of the anionic monomers incorporated in the form of polymerized units being at least equal to that of the nonionic monomers;
b4) cationic copolymers of nonionic monoethylenically unsaturated monomers and cationic monoethylenically unsaturated monomers and, if appropriate, anionic monoethylenically unsaturated monomers, the number of cationic groups being greater than the number of anionic groups.

3. The paper coating slip according to claim 1 or 2, wherein the polymerization is effected in the presence of at least one first polymeric stabilizer and at least one second polymeric stabilizer differing therefrom, the first stabilizer being selected from the group (a) according to claim 2 and the second stabilizer being selected from the group (b) according to claim 2.

4. The paper coating slip according to any of the preceding claims, wherein the metal salt pigments are selected from the group consisting of calcium sulfate, calcium aluminate sulfate, barium sulfate, magnesium carbonate and calcium carbonate.

5. The paper coating slip according to any of the preceding claims, wherein the amount of metal salt pigments is from 50 to 100% by weight, based on the total amount of pigments.

6. The paper coating slip according to any of the preceding claims, wherein at least one further inorganic pigment selected from the group consisting of silicic acids, aluminum oxides, hydrated alumina, silicates, titanium dioxide, zinc oxide, kaolin, alumina, talc and silicon dioxide is present in addiction to the metal salt pigment.

7. The paper coating slip according to any of the preceding claims, wherein the first monomer type of the copolymer is selected from the group consisting of monoethylenically unsaturated C₃- to C₅-carboxylic acids, vinylsulfonic acid, styrenesulfonic acid, acrylamidomethylpropanesulfonic acid, vinylphosphonic acid and the alkali metal and ammonium salts of these acids.

8. The paper coating slip according to any of the preceding claims, wherein the second monomer type of the copolymer is selected from the group consisting of acrylamide, methacrylamide, acrylates of monohydric alcohols having 1 to 20 carbon atoms, methacrylates of monohydric alcohols having 1 to 20 carbon atoms, vinyl acetate and vinyl propionate.

9. The paper coating slip according to any of the preceding claims, wherein the weight ratio of first monomer to second monomer of the copolymer is from 95:5 to 60:40.

10. The paper coating slip according to any of the preceding claims, wherein the amount of copolymer in the paper coating slip is from 0.05 to 5 parts by weight per 100 parts by weight of pigment.

11. The paper coating slip according to any of the preceding claims, wherein the copolymer is a copolymer of acrylic acid with at least one comonomer selected from the group consisting of acrylates of monohydric alcohols having 1 to 20 carbon atoms and methacrylates of monohydric alcohols having 1 to 20 carbon atoms.

12. The paper coating slip according to any of the preceding claims, wherein the copolymer has a K value of at least 60.

13. The paper coating slip according to any of the preceding claims, which additionally comprises at least one assistant selected from the group consisting of polymeric binders, cobinders, optical brighteners, fillers, leveling agents, dispersants, surfactants, lubricants, neutralizing agents, antifoams, deaerating agents, preservatives and dyes.

14. The paper coating slip according to the preceding claim, wherein the polymeric binder is used in an amount of from 1 to 50 parts by weight, based on the total amount of pigments, and the polymeric binder is selected from the group consisting of starch-based binders and emulsion polymers comprising at least 40% by weight of main monomers selected from C₁-C₂₀-alkyl (meth)acrylates, vinyl esters of carboxylic acids comprising up to 20 carbon atoms, vinylaromatics having up to 20 carbon atoms, ethylenically unsaturated nitriles, vinyl halides, vinyl ethers of alcohols comprising 1 to 10 carbon atoms, aliphatic hydrocarbons having 2 to 8 carbon atoms and one or two double bonds or mixtures of these monomers.

15. The paper coating slip according to any of the preceding claims, which comprises, based on an aqueous medium,
(i) from 80 to 95 parts by weight of inorganic pigments, based on the total solids content, at least one calcium carbonate pigment in an amount of from 50 to 100 parts by weight, based on the total amount of pigments, being present, and
(ii) from 0.05 to 5 parts by weight, based on the total amount of pigments, of at least one copolymer in the form of an aqueous dispersion of water-soluble copolymers obtainable by free-radical polymerization of at least one first monomer type and at least one second monomer type in the presence of at least one first polymeric stabilizer and at least one second polymeric stabilizer,
the first monomer type being selected from the group consisting of acrylic acid and methacrylic acid and the second monomer type being selected from the group consisting of acrylates of monohydric alcohols having 1 to 20 carbon atoms and methacrylates of monohydric alcohols having 1 to 20 carbon atoms, and
the first polymeric stabilizer being selected from the group consisting of polyethylene glycol and polyethylene glycol/polypropylene glycol block copolymers and the second polymeric stabilizer being selected from the group consisting of at least partly hydrolyzed copolymers of vinyl alkyl ethers and maleic anhydride and copolymers of methacrylic acid and acrylamidoalkanesulfonic acid.

16. The paper coating slip according to any of the preceding claims, wherein the water-soluble copolymer present in the aqueous dispersion is not crosslinked.

17. The use of an aqueous dispersion of water-soluble copolymers in paper coating slips comprising metal salt pigment, the copolymers being obtainable by free-radical polymerization of at least one first monomer type and at least one second monomer type in the presence of at least one polymeric stabilizer, the first monomer type comprising ethylenically unsaturated, anionic monomers capable of free radical polymerization and the second monomer type comprising ethylenically unsaturated, nonionic monomers capable of free radical polymerization.

18. The use of the paper coating slip according to any of claims 1 to 16 for coating paper or cardboard.

19. A paper or cardboard coated with the paper coating slip according to any of claims 1 to 16.

20. A method for coating paper or cardboard,
- an aqueous dispersion of at least one water-soluble copolymer being provided, the copolymer being obtainable by free radical polymerization of at least one first monomer type and at least one second monomer type in the presence of at least one polymeric stabilizer, the first monomer type comprising ethylenically unsaturated, anionic monomers capable of free radical polymerization and the second monomer type comprising ethylenically unsaturated, nonionic monomers capable of free radical polymerization; and
- the coating slip being prepared with the aqueous dispersion, at least one metal salt pigment, at least one binder, water and optional further assistants; and the coating slip being applied to paper or cardboard.

## Revendications

1. Composition de revêtement de papier, contenant
(i) des pigments inorganiques, au moins un pigment de sel métallique étant contenu en une quantité d'au moins 40 parties en poids, par rapport à la quantité totale de pigments, et
(ii) une dispersion aqueuse de copolymères solubles dans l'eau, pouvant être obtenus par polymérisation radicalaire d'au moins un premier type de monomère et d'au moins un second type de monomère en présence d'au moins un stabilisateur polymère pour dispersions polymères eau dans eau,
le premier type de monomère comprenant des monomères anioniques éthyléniquement insaturés polymérisables par voie radicalaire et le second type de monomère comprenant des monomères non ioniques éthyléniquement insaturés polymérisables par voie radicalaire.

2. Composition de revêtement de papier selon la revendication 1, **caractérisée en ce que** le stabilisateur polymère est choisi parmi les polymères solubles dans l'eau des groupes (a) et (b) suivants,
le groupe a) étant constitué par :
a1) les polymères greffés d'acétate de vinyle et/ou de propionate de vinyle sur (i) des polyéthylène glycols ou (ii) des polyéthylène glycols ou polypropylène glycols coiffés d'un côté ou des deux côtés avec des groupes alkyle, carboxyle ou amino ;
a2) les polyalkylène glycols ;
a3) les polyalkylène glycols coiffés d'un côté ou des deux côtés avec des groupes alkyle, carboxyle ou amino ;
a4) les copolymères d'acrylates d'alkylpolyalkylène glycols ou de méthacrylates d'alkylpolyalkylène glycols et d'acide acrylique et/ou d'acide méthacrylique ;
et le groupe b) étant constitué par :
b1) les copolymères au moins partiellement hydrolysés d'éthers de vinylalkyle et d'anhydride de l'acide maléique, qui peuvent se présenter au moins partiellement sous la forme saline neutralisée p. ex. avec des hydroxydes de métaux alcalins ou des bases d'ammonium ;
b2) l'amidon soluble dans l'eau ;
b3) les homo- et copolymères anioniques choisis dans le groupe constitué par :
- les homo- et copolymères exclusivement de monomères anioniques ;
- les copolymères de monomères anioniques et cationiques et éventuellement neutres, la proportion des monomères anioniques copolymérisés étant supérieure à celle des monomères cationiques ; et
- les copolymères d'au moins un monomère anionique et d'au moins un monomère du groupe des esters de monomères anioniques avec des alcools monovalents, du styrène, de la N-vinylpyrrolidone, du N-vinylcaprolactame, du N-vinylimidazole, du N-vinylformamide, de l'acrylamide, du méthacrylamide, de l'acétate de vinyle et du propionate de vinyle ;
- les copolymères solubles dans l'eau ou dispersibles dans l'eau de (1) monomères anioniques monoéthyléniquement insaturés et (2) monomères non ioniques monoéthyléniquement insaturés, la proportion des monomères anioniques copolymérisés étant au moins aussi grande que celle des monomères non ioniques ;
b4) les copolymères cationiques de monomères non ioniques monoéthyléniquement insaturés et de monomères cationiques monoéthyléniquement insaturés et éventuellement de monomères anioniques monoéthyléniquement insaturés, le nombre de groupes cationiques étant supérieur au nombre de groupes anioniques.

3. Composition de revêtement de papier selon la revendication 1 ou 2, **caractérisée en ce que** la polymérisation a lieu en présence d'au moins un premier stabilisateur polymère et d'au moins un second stabilisateur polymère différent de celui-ci, le premier stabilisateur étant choisi dans le groupe (a) selon la revendication 2 et le second stabilisateur étant choisi dans le groupe (b) selon la revendication 2.

4. Composition de revêtement de papier selon l'une quelconque des revendications précédentes, **caractérisée en ce que** les pigments de sel métallique sont choisis dans le groupe constitué par le sulfate de calcium, l'aluminate-sulfate de calcium, le sulfate de baryum, le carbonate de magnésium et le carbonate de calcium.

5. Composition de revêtement de papier selon l'une quelconque des revendications précédentes, **caractérisée en ce que** la quantité de pigments de sel métallique est de 50 à 100 % en poids, par rapport à la quantité totale de pigments.

6. Composition de revêtement de papier selon l'une quelconque des revendications précédentes, **caractérisée en ce qu'**en plus du pigment de sel métallique, au moins un autre pigment inorganique est contenu, choisi dans le groupe constitué par les silices, les oxydes d'aluminium, l'hydrate d'aluminium, les silicates, le dioxyde de titane, l'oxyde de zinc, le kaolin, l'alumine, le talc et le dioxyde de silicium.

7. Composition de revêtement de papier selon l'une quelconque des revendications précédentes, **caractérisée en ce que** le premier type de monomère du copolymère est choisi dans le groupe constitué par les acides carboxyliques en C₃ à C₅ monoéthyléniquement insaturés, l'acide vinylsulfonique, l'acide styrènesulfonique, l'acide acrylamidométhylpropanesulfonique, l'acide vinylphosphonique et les sels de métaux alcalins ou d'ammonium de ces acides.

8. Composition de revêtement de papier selon l'une quelconque des revendications précédentes, **caractérisée en ce que** le second type de monomère du copolymère est choisi dans le groupe constitué par l'acrylamide, le méthacrylamide, les esters de l'acide acrylique d'alcools monovalents contenant 1 à 20 atomes C, les esters de l'acide méthacrylique d'alcools monovalents contenant 1 à 20 atomes C, l'acétate de vinyle et le propionate de vinyle.

9. Composition de revêtement de papier selon l'une quelconque des revendications précédentes, **caractérisée en ce que** le rapport en poids entre le premier type de monomère et le second type de monomère du copolymère est de 95:5 à 60:40.

10. Composition de revêtement de papier selon l'une quelconque des revendications précédentes, **caractérisée en ce que** la quantité de copolymère dans la composition de revêtement de papier est de 0,05 à 5 parties en poids pour 100 parties en poids de pigment.

11. Composition de revêtement de papier selon l'une quelconque des revendications précédentes, **caractérisée en ce que** le copolymère est un copolymère d'acide acrylique avec au moins un comonomère choisi dans le groupe constitué par les esters de l'acide acrylique d'alcools monovalents contenant 1 à 20 atomes C et les esters de l'acide méthacrylique d'alcools monovalents contenant 1 à 20 atomes C.

12. Composition de revêtement de papier selon l'une quelconque des revendications précédentes, **caractérisée en ce que** le copolymère présente une valeur K d'au moins 60.

13. Composition de revêtement de papier selon l'une quelconque des revendications précédentes, **caractérisée en ce qu'**elle contient également au moins un adjuvant choisi dans le groupe constitué par les liants polymères, les co-liants, les azurants optiques, les charges, les adjuvants d'écoulement, les dispersants, les tensioactifs, les lubrifiants, les agents de neutralisation, les agents anti-mousse, les agents d'aération, les conservateurs et les colorants.

14. Composition de revêtement de papier selon la revendication précédente, **caractérisée en ce que** le liant polymère est utilisé en une quantité de 1 à 50 parties en poids, par rapport à la quantité totale de pigments et le liant polymère est choisi dans le groupe constitué par les liants à base d'amidon et les polymères en émulsion constitués d'au moins 40 % en poids de monomères principaux choisis parmi les (méth)acrylates d'alkyle en C₁-C₂₀, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant de 1 à 10 atomes C, les hydrocarbures aliphatiques contenant 2 à 8 atomes C et une ou deux doubles liaisons ou les mélanges de ces monomères.

15. Composition de revêtement de papier selon l'une quelconque des revendications précédentes, **caractérisée en ce qu'**elle contient dans une base aqueuse :
(i) de 80 à 95 parties en poids de pigments inorganiques, par rapport à la teneur totale en solides, au moins un pigment de carbonate de calcium étant contenu en une quantité de 50 à 100 parties en poids, par rapport à la quantité totale de pigments, et
(ii) de 0,05 à 5 parties en poids, par rapport à la quantité totale de pigments, d'au moins un copolymère sous la forme d'une dispersion aqueuse de copolymères solubles dans l'eau, pouvant être obtenus par polymérisation radicalaire d'au moins un premier type de monomère et d'au moins un second type de monomère en présence d'au moins un premier stabilisateur polymère et d'au moins un second stabilisateur polymère,
le premier type de monomère étant choisi dans le groupe constitué par l'acide acrylique et l'acide méthacrylique et le second type de monomère étant choisi dans le groupe constitué par les esters de l'acide acrylique d'alcools monovalents contenant 1 à 20 atomes C et les esters de l'acide méthacrylique d'alcools monovalents contenant 1 à 20 atomes C, et
le premier stabilisateur polymère étant choisi dans le groupe constitué par le polyéthylène glycol et les copolymères séquencés de polyéthylène glycol/polypropylène glycol et le second stabilisateur polymère étant choisi dans le groupe constitué par les copolymères au moins partiellement hydrolysés d'éthers de vinylalkyle et d'anhydride de l'acide maléique et les copolymères d'acide méthacrylique et d'acide acrylamidoalkylsulfonique.

16. Composition de revêtement de papier selon l'une quelconque des revendications précédentes, **caractérisée en ce que** le copolymère soluble dans l'eau contenu dans la dispersion aqueuse n'est pas réticulé.

17. Utilisation d'une dispersion aqueuse de copolymères solubles dans l'eau dans des compositions de revêtement de papier contenant un pigment de sel métallique, les copolymères pouvant être obtenus par polymérisation radicalaire d'au moins un premier type de monomère et d'au moins un second type de monomère en présence d'au moins un stabilisateur polymère, le premier type de monomère comprenant des monomères anioniques éthyléniquement insaturés polymérisables par voie radicalaire et le second type de monomère comprenant des monomères non ioniques éthyléniquement insaturés polymérisables par voie radicalaire.

18. Utilisation de la composition de revêtement de papier selon l'une quelconque des revendications 1 à 16 pour le revêtement de papier ou de carton.

19. Papier ou carton revêtu avec une composition de revêtement de papier selon l'une quelconque des revendications 1 à 16.

20. Procédé de revêtement de papier ou de carton, selon lequel :
- une dispersion aqueuse d'au moins un copolymère soluble dans l'eau est préparée, le copolymère pouvant être obtenu par polymérisation radicalaire d'au moins un premier type de monomère et d'au moins un second type de monomère en présence d'au moins un stabilisateur polymère, le premier type de monomère comprenant des monomères anioniques éthyléniquement insaturés polymérisables par voie radicalaire et le second type de monomère comprenant des monomères non ioniques éthyléniquement insaturés polymérisables par voie radicalaire ; et
- une sauce de couchage est fabriquée avec la dispersion aqueuse, au moins un pigment de sel métallique, au moins un liant, de l'eau et des adjuvants supplémentaires optionnels ; et la sauce de couchage est appliquée sur du papier ou du carton.
